# EUROPÄISCHE PATENTSCHRIFT

(11) **EP 1 487 882 B1**
(45) Veröffentlichungstag und Bekanntmachung des Hinweises auf die Patenterteilung: **24.05.2006**
(21) Anmeldenummer: 03712064.9
(22) Anmeldetag: 20.03.2003
(51) Int. Cl.: C08F 8/04

(54) **DURCH HYDRIERUNG GEWONNENES BASISCHES POLYMER**
BASE POLYMER OBTAINED BY HYDROGENATION
POLYMERE DE BASE PRODUIT PAR HYDROGENATION

(30) Priorität: 21.03.2002 DE 10212702
(43) Veröffentlichungstag der Anmeldung: 22.12.2004
(73) Patentinhaber: Stockhausen GmbH, 47805 Krefeld (DE)
(72) Erfinder: HOUBEN, Jochen, 47906 Kempen (DE); NEUMANN, Claudius, 64380 Rossdorf (DE); MERTENS, Richard, 47803 Krefeld (DE); HOELLER, Olaf, Greensboro, NC 27407 (US)
(74) Vertreter: Hakvoort, Ansgar
(86) Internationale Anmeldenummer: PCT/EP2003/002935
(87) Internationale Veröffentlichungsnummer: WO 2003/080682

(56) Entgegenhaltungen:
- EP-A- 0 027 582
- WO-A-92/02114
- DE-A- 2 831 335
- FR-A- 2 322 878

## Beschreibung

Die Erfindung betrifft ein Verfahren zur Herstellung eines basischen Polymers, dieses Polymer, ein Verfahren zur Herstellung einer Zusammensetzung, diese Zusammensetzung, Herstellung eines Verbunds, diesen Verbund, Schäume, Formkörper, Fasern, Folien, Filme, Kabeln, Dichtungsmaterialien, flüssigkeitsaufnehmende Hygieneartikel, Träger für pflanzen- und pilzwachstumsregulierende Mittel, Verpackungsmaterialien, Baustoffe und Bodenzusätzen, beinhaltend das basische Polymer oder die Zusammensetzung oder den Verbund sowie die Verwendung des basischen Polymers oder der Zusammensetzung oder des Verbunds in Schäumen, Formkörpern, Fasern, Folien, Filmen, Kabeln, Dichtungsmaterialien, flüssigkeitsaufnehmenden Hygieneartikeln, Trägem für pflanzen- und pilzwachstumsregulierende Mittel, Verpackungsmaterialien, Baustoffen und Bodenzusätzen als auch zur Flockung, bei der Retention in der Papierherstellung, zur Störstofffixierung in der Papierherstellung, zur Trockenverfestigung in der Papierherstellung oder zur Nassverfestigung in der Papierherstellung.

Aus der WO99/34843 sind sogenannte "Mixed-Bed Ion-Exchange Absorbent Polymers" (MBIEA-Polymere) bekannt, die sich dadurch auszeichnen, dass sie große Mengen von künstlichem Urin unter Belastung absorbieren können. In der Regel stellen MBIEA-Polymere eine Zusammensetzung dar, die zum einen basische absorbierende Polymere, die in der Lage sind, Anionen auszutauschen, und andererseits ein im Vergleich zu dem basischen absorbierenden Polymer saures absorbierendes Polymer, das in der Lage ist, Kationen auszutauschen, beinhalten. Das basische absorbierende Polymer weist basische Gruppen auf und wird typischerweise durch die Polymerisation von Monomeren erhalten, die basische Gruppen oder Gruppen tragen, die in basische Gruppen umgewandelt werden können. Bei diesen Monomeren handelt es sich vor allen Dingen um solche, die primäre, sekundäre und/oder tertiäre Amine und die entsprechenden Phosphine aufweisen. Zu dieser Gruppe von Monomeren gehören insbesondere Allylamin, Diallylamin, 4-Aminobuten, Vinylformamid, 5-Aminopenten, und dergleichen, sowie deren sekundäre oder tertiäre Aminderivate.

MBIEA-Polymere werden vorzugsweise in Artikeln eingesetzt, die zur Aufnahme von Körperflüssigkeiten bestimmt sind. Hierbei handelt es sich vor allem um Windeln, die für Säuglinge und bei Altersinkontinenz eingesetzt werden, und um Damenhygieneartikel, die im Zusammenhang mit Regelblutungen eingesetzt werden. Alle Anwendungen dieser Artikel haben gemein, dass die Artikel für eine vergleichsweise lange Zeit, in der Regel mehrere Stunden, in Hautkontakt eingesetzt werden. Da von den Artikeln Körperflüssigkeiten aufgenommen werden, stehen sie darüber hinaus über diesen langen Zeitraum im Flüssigkeitskontakt mit der Haut oder mit Schleimhäuten.

Daher sind die toxikologischen Anforderungen, die an die Artikel bzw. die Bestandteile, aus denen die Artikel bestehen, gestellt werden, sehr hoch.

Die nach dem herkömmlichen Verfahren zur Herstellung von basischen absorbierenden Polymeren verwendeten Monomere sind jedoch bereits in geringen Mengen unter diesen Umständen toxikologisch bedenklich. Ferner sind diese Verfahren kostspielig und die Herstellungskapazitäten begrenzt.

Daher besteht die erfindungsgemäße Aufgabe allgemein darin, die Nachteile des Standes der Technik zu überwinden.

Ferner besteht eine erfindungsgemäße Aufgabe darin, eine MBIEA-Polymerzusammensetzung mit einer möglichst geringen Restmonomerkonzentration zur Verfügung zu stellen.

Zudem liegt eine erfindungsgemäße Aufgabe darin, eine MBIEA-Polymerzusammensetzung zur Verfügung zu stellen, die neben dem möglichst geringen Restmonomergehalt geeignet ist, synthetischen Urin unter Belastung in großen Mengen zu absorbieren.

Darüber hinaus besteht eine erfindungsgemäße Aufgabe darin, Hygieneartikel zur Verfügung zu stellen, die aufgrund guter toxikologischer Eigenschaften einen hohen Tragekomfort mit geringer Gefahr von Haut- bzw. Schleimhautreizungen bieten.

Weiterhin liegt der Erfindung die Aufgabe zugrunde, ein Polymer zur Verfügung zu stellen, dass sich zur Flockung, bei der Retention in der Papierherstellung, zur Störstofffixierung in der Papierherstellung, zur Trockenverfestigung in der Papierherstellung oder zur Nassverfestigung in der Papierherstellung eignet.

Ferner liegt eine erfindungsgemäße Aufgabe darin, ein basisches Polymer zur Verfügung zu stellen, dass einen möglichst geringen Restmonomergehalt aufweist und sich damit in toxikologisch sensiblen Anwendungen, insbesondere im Hygienebereich, beim Einsatz in Böden oder in der Wasseraufbereitung, einsetzen lässt.

Die vorstehenden Aufgaben werden gelöst durch ein Verfahren zur Herstellung eines basischen Polymers, wobei ein durch Kettenpolymerisation erhältliches Amidpolymer (nachfolgend "Amidpolymer" genannt) mit mindestens einer, vorzugsweise allen, der folgenden Eigenschaften:
(a) eine Glastemperatur gemäß DIN-EN-ISO 11357 im Bereich von 30 bis 250, bevorzugt von 100 bis 200 und besonders bevorzugt von 165 bis 195 °C,
(b) eine Molmasse gemäß DIN 55672 - 3 von mindestens 1.000, bevorzugt von 1.000 bis 1 x 10⁷, besonders bevorzugt von 10.000 bis 1 x 10⁵ und darüber hinaus bevorzugt von 50.000 bis 500.000 g/mol,
(c) eine Viskosität gemäß ASTM-D 1824/90 bei 20 °C als 20 Gew.-%ige wässrige Lösung von mindestens 500, bevorzugt 500 bis 200.000, besonders bevorzugt 500 bis 100.000 und darüber hinaus bevorzugt 500 bis 5.000 mPa × s,
(d) unvernetzt
hydriert wird.

Die sich aus den vorstehenden Eigenschaften ergebenden Eigenschaftskombinationen von zwei oder mehr dieser Eigenschaften stellen jeweils bevorzugte Ausführungsformen des erfindungsgemäßen Verfahrens dar. Weiterhin als erfindungsgemäße Ausführungsformen besonders bevorzugt sind Verfahren, in denen das Amidpolymer die nachfolgend als Buchstaben oder Buchstabenkombinationen dargestellten Eigenschaften oder Eigenschaftskombinationen zeigt: a, b, c, d, ab, abc, abcd, bc, bcd, cd, wobei abcd, ab oder abd bevorzugt und ab besonders bevorzugt ist.

Erfindungsgemäß wird unter dem Begriff durch Kettenpolymerisation erhältliches Amidpolymer ein mindestens eine Amidgruppe enthaltendes Polymer verstanden, das durch Kettenpolymerisation von mindestens eine Amidgruppe enthaltenden Monomeren erhalten wird. Unter Kettenpolymerisation wird erfindungsgemäß jedes Polymerisationsverfahren verstanden, bei dem es nicht zu Abspaltung eines Bestandteils kommt, wie es bei der Kondensationspolymerisation üblich ist. Bevorzugte Kettenpolymerisationen sind die radikalische, anionische, kationische, Gruppentransfer-, koordinative oder Ringöffnungspolymerisation, wobei die radikalische Polymerisation bevorzugt ist. Bevorzugte erfindungsgemäße Amidpolymere sind aus Acrylamid und gegebenenfalls einem mit Acrylamid copolymerisierbaren Comonomer gebildet. In diesem Acrylamidcopolymer ist mindestens ein Comonomer in einer Menge im Bereich von 0,01 bis 90, bevorzugt von 0,1 bis 70 und besonders bevorzugt von 1 bis 50 sowie darüber hinaus bevorzugt von 2 bis 30 Gew.-%, bezogen auf die Summe der eingesetzten Monomere, als Comonomer einpolymerisiert.

Bevorzugte Comonomere sind Acrylsäure, Methacrylsäure, Methacrylsäureamid, Di-Methacrylsäureamid, Methylmethacrylat, Acrylnitril, Vinylacetat, Vinylformamid, Vinylacetamid, N-Isopropylacrylamid, N-Isopropylmethacrylamid, Aminopropylacrylamid, Amino-2,2-dimethylpropylacrylamid, Aminoethylacrylamid, Aminopropylacrylat, Amino-2,2-dimethylpropylacrylat, Aminoethylacrylat, Aminopropylmethacrylamid, Amino-2,2-dimethylpropylmethacrylamid, Aminoethylmethacrylamid, N-Methyl-aminopropylacrylamid, N-Methyl-amino-2,2-dimethylpropylacrylamid, N-Methyl-aminoethylacrylamid, N-Methyl-aminopropylacrylat, N-Methyl-amino-2,2-dimethylpropylacrylat, N-Methyl-aminoethylacrylat, N-Methyl-aminopropylmethacrylamid, N-Methyl-amino-2,2-dimethylpropylmethacrylamid, N-Methyl-aminoethylmethacrylamid, N-Ethyl-aminopropylacrylamid, N-Ethyl-amino-2,2-dimethylpropylacrylamid, N-Ethyl-aminoethylacrylamid, N-Ethyl-aminopropylacrylat, N-Ethyl-amino-2,2-dimethylpropylacrylat, N-Ethylaminoethylacrylat, N-Ethyl-aminopropylmethacrylamid, N-Ethyl-amino-2,2-dimethylpropylmethacrylamid, N-Ethyl-aminoethylmethacrylamid, N,N-Dimethylaminopropylacrylamid, N,N-Dimethylamino-2,2-dimethylpropylacrylamid, N,N-Dimethylaminoethylacrylamid, N,N-Dimethylaminopropylacrylat, N,N-Dimethylamino-2,2-dimethylpropylacrylat, N,N-Dimethylaminoethylacrylat, N,N-Diethylaminopropylacrylamid, N,N-Diethylamino-2,2-dimethylpropylacrylamid, N,N-Diethylaminoethylacrylamid, N,N-Diethylaminopropylacrylat, N,N-Diethylamino-2,2-dimethylpropylacrylat, N,N-Diethylaminoethylacrylat, N,N-Dimethylaminopropylmethacrylamid, N,N-Dimethylamino-2,2-dimethylpropylmethacrylamid, N,N-Dimethylaminoethylmethacrylamid, N,N-Dimethylaminopropylmethacrylat, N,N-Dimethylamino-2,2-dimethylpropylmethacrylat, N,N-Dimethylaminoethylmethacrylat, N,N-Diethylaminopropylmethacrylamid, N,N-Diethylamino-2,2-dimethylpropylacrylamid, N,N-Diethylaminoethylmethacrylamid, N,N-Diethylaminopropylmethacrylat, N,N-Diethylamino-2,2-dimethylpropylmethacrylat, N,N-Diethylaminoethylmethacrylat, Acrylamidopropansulfonsäure oder deren Salze, wobei Acrylnitril, Vinylfonnamid, Vinylacetamid, N-Isopropylacrylamid, N,N-Dimethylaminopropylacrylamid, N,N-Dimethylaminoethylacrylamid, N,N-Dimethylaminoethylacrylat, N,N-Diethylaminopropylacrylamid, N,N-Dimethylaminopropyimethacrylamid, N,N-Dimethylaminoethylmethacrylat, Methacrylsäureamid oder Dimethylacrylsäureamid bevorzugt und Vinylformamid, Vinylacetamid, N,N-Dimethylaminopropylacrylamid, N,N-Dimethylaminoethylacrylamid, N,N-Dimethylaminopropylmethacrylamid, Methacrylsäureamid oder Dimethylacrylsäureamid besonders bevorzugt ist.

Gemäß einer bevorzugten Ausführungsform der Erfindung weisen die Amidpolymer vorzugsweise eine Glastemperatur von maximal 70° C auf und liegen als Wachse vor. Die gemäß einer anderen Ausführungsform der vorliegenden Erfindung eine Glastemperatur von mehr als 70° C aufweisenden Amidpolymere werden als Feststoffe bezeichnet.

Unter "unvernetzt" wird erfindungsgemäß verstanden, dass das in Frage kommende Polymer in einem Lösungsmittel gelöst werden kann, ohne dass zwischen den Ketten des Polymers bestehende kovalente chemische Bindungen aufgebrochen werden müssen und durch den Lösungsvorgang das Molekulargewicht des zu lösenden Polymers verringert wird. Dieses kann beispielsweise durch den Filtertest bestimmt werden. Vorzugsweise liegt das Amidpolymer unvernetzt vor, wenn auf der über den Filtertest bestimmte Rückstand weniger als 80 Gew.-%, vorzugsweise weniger als 40 Gew.-% und besonders bevorzugt weniger als 20 Gew.% und darüber hinaus bevorzugt weniger als 10 Gew.-% des in dem Filtertest eingesetzten Polymers als Rückstand verbleibt.

Vorzugsweise ist das Amidpolymer wasserlöslich, wobei vorzugsweise bei dem Filtertest kein aus dem Amidpolymer bestehender Rückstand verbleibt.

Das Amidpolymer kann durch dem Fachmann bekannte Polymerisationsverfahren hergestellt werden. In diesem Zusammenhang sind die radikalische Substanz-, Suspensions- oder Emulsionspolymerisation beispielhaft zu nennen. Weitere Einzelheiten können Odian "Priciples of Polymer Chemistry" 2. Ed., Wiley Interscience 1981, Seite 296 mit weiteren Nachweisen entnommen werden.

Ferner ist es erfindungsgemäß bevorzugt, dass das Hydrieren mittels eines Hydrierkatalysators erfolgt. Vorzugsweise beinhaltet der Hydrierkatalysator ein, vorzugsweise katalytisch aktives, Element der Gruppen VI B, VII B oder VIII B des Periodensystems der Elemente oder mindestens zwei daraus. Unter denen sind Ruthenium, Rhodium, Palladium, Molybdän, Wolfram und Rhenium bevorzugt und Ruthenium besonders bevorzugt.

Das Ruthenium wird erfindungsgemäß vorzugsweise als nullwertiges Metall und/oder in Form verschiedener anorganischer, organischer oder Komplexverbindungen eingesetzt. Hierunter sind bevorzugt Rutheniumschwarz, Rutheniumpulver, Rutheniumoxid, Rutheniumnitrat, Nitrosilrutheniumnitrat, Rutheniumchlorid, Rutheniumbromid, Rutheniumiodid, Oxydecachlororutheniumsäureammonium, Pentachloroaquarutheniumsäureammonium, Oxydecachlorodirutheniumsäurekalium, Oxydecachlorodirutheniumsäurenatrium, Pentachloroaquarutheniumsäurekalium, Perrutheniumsäurekalium, Hexaaminrutheniumchlorid, Pentaaminchlororutheniumchlorid, Hexaaminrutheniumbromid, Dodecacarbonyltriruthenium, Hexacarbonyltetrachlorodiruthenium, Tris(acetylacetonat)ruthenium, Dichlorotricarbonylrutheniumdimere, Dichlorotris(triphenylphoshpin)ruthenium, Dichlorodicarbonylbis(triphenylphosphin)ruthenium, Dicarbonylcyclopentadienylrutheniumdimere oder Bis(cyclopentadienyl)ruthenium.

Das Rhodium kann in seiner nullwertigen Form oder als anorganische oder organische oder Komplexverbindung eingesetzt werden. Bevorzugte Rhodiumverbindungen sind Rhodiumschwarz, Rhodiumpulver, Rhodiumoxid, Rhodiumnitrat, Rhodiumacetat, Rhodiumacetatdimere, Rhodiumchlorid, Rhodiumbromid, Rhodiumiodid, Hexachlororhodiumsäureammonium, Pentachloroaquarhodiumsäureammonium, Pentachloroaquarhodiumsäurekalium, Hexachlororhodiumsäurenatrium, Hexabromorhodiumsäurenatrium, Chloropentaaminrhodiumchlorid, Dodecacarbonyltetrarhodium, Hexadecacarbonylhexarhodium, Tris(acetylacetonat)-rhodhium, Bis(1,3-diphenyl-1,3-propandionat)rhodiumacetat oder Bis(pentamethylcyclopentadienyl)dichlororhodium.

Palladium kann erfindungsgemäß einmal als nullwertiges Metall und/oder in Form verschiedener anorganischer, organischer oder Komplexverbindungen eingesetzt werden. Bevorzugt sind hierunter Palladiumschwarz, Palladiumpulver, Palladiumoxid, Palladiumnitrat, Palladiumacetat, Palladiumsulfat, Palladiumchlorid, Palladiumbromid, Palladiumiodid, Hexachloropalladiumsäureammonium, Tetrachloropalladiumsäureammonium, Dinitrodiaminpalladium, Hexachloropalladiumsäurekalium, Tetrabromopalladiumsäurekalium, Hexachloropalladiumsäurenatrium, oder Bis(acetylacetonat)palladium.

Molybdän kann erfindungsgemäß zum einen in Form des nullwertigen Metalls und/oder als anorganische, organische oder Komplexverbindungen eingesetzt werden. Hierunter sind bevorzugt Molybdänhexacarbonyl, Molybdänsäureammonium, Molybdänacetat, Molybdänoxid oder Molybdänoxidacetylacetonat.

Wolfram kann erfindungsgemäß als nullwertiges Metall und/oder in Form seiner anorganischen, organischen oder Komplexverbindungen eingesetzt werden. Hierunter sind bevorzugt Wolframhexacarbonyl, Wolframoxid, Wolframsäure oder Parawolframsäureammonium.

Erfindungsgemäß kann Rhenium in Form des nullwertigen Metalls oder als anorganische, organische oder Komplexverbindungen eingesetzt werden. Hierunter sind Rheniumcarbonyl, Rheniumoxid, Rheniumsäure, Rheniumsäureammonium, Rheniumchlorid oder Cyclopentadienylrheniumcarbonyl bevorzugt.

In einer anderen Ausführungsform des erfindungsgemäßen Verfahrens ist es bevorzugt, dass der Hydrierkatalysator einen Träger beinhaltet, auf dem die Elemente der Gruppen VI B, VII B oder VIII B des Periodensystems der Elemente oder deren Verbindungen aufgebracht sind. Der Elementanteil an dem Hydrierkatalysator mit einem Träger beträgt 0,01 bis 70, bevorzugt 0,1 bis 60 und besonders bevorzugt 0,5 bis 50 Gew.-%, bezogen auf den Hydrierkatalysator mit Träger.

Der Hydrierkatalysator mit Träger kann nach allgemein bekanntem Verfahren hergestellt werden. Unter diesen sind das Eintauchverfahren, das Ionenaustauschverfaluen, physikalische Vermischung und andere möglich.

Erfolgt die Herstellung durch das Eintauchverfahren, werden die Metallverbindungen der vorgenannten Gruppen des Periodensystems der Elemente in einem geeigneten Lösungsmittel gelöst, der Träger beigegeben und gegebenenfalls für eine bestimmte Zeit ruhiggestellt und danach getrocknet. Im Anschluss an die Trocknung kann eine Reduktion erfolgen, es ist jedoch gleichfalls möglich, die Reduktion auch nach einem Brennen vorzunehmen. Eine Reduktion im Reaktionssystem ist ebenfalls möglich. Das Reduktionsverfahren ist nicht beschränkt, es kann Wasserstoff verwendet werden und in der Gasphase reduziert werden oder auch Stoffe wie Hydrazin verwendet werden und in der Flüssigphase reduziert werden. Die Reduktionstemperatur ist nicht beschränkt, solange zumindest eine Metallverbindung der vorstehend genannten Gruppen des Periodensystems zum nullwertigen Metall reduziert bzw. oxidiert wird. In der Regel geschieht dieses bei Temperaturen im Bereich von 200 bis 700, bevorzugt von 300 bis 600 und besonders bevorzugt von 400 bis 500 °C.

In dem Hydrierkatalysator des erfindungsgemäßen Verfahrens wird als Träger bevorzugt ein poröses Material verwendet. Vorzugsweise können Metalloxide oder zusammengesetzte Oxide schichtförmige Tonverbindungen, Aktivkohle und dergleichen eingesetzt werden. Hierunter sind Silica, Aluminiumoxid und Aktivkohle bevorzugt, wobei Aktivkohle besonders bevorzugt ist. Ferner ist in dem erfindungsgemäßen Verfahren bevorzugt, die katalytisch aktiven Elemente des Hydrierkatalysators in einer Menge im Bereich von 0,01 bis 20, bevorzugt on 0,05 bis 10 Gew.-% und besonders bevorzugt von 0,1 bis 5 Gew.-%, jeweils bezogen auf das trockene Amidpolymer, einzusetzen.

Weiterhin ist es in dem erfindungsgemäßen Verfahren bevorzugt, dass das Hydrieren nach mindestens einem, vorzugsweise allen, der nachfolgenden Parameter erfolgt:
(h1) in einer flüssigen oder superkritischen, vorzugsweise flüssigen Phase,
(h2) bei einer Temperatur von mindestens 30 °C, bevorzugt im Bereich von 70 bis 200 °C und besonders bevorzugt im Bereich von 100 bis 150°C,
(h3) einem Gasdruck von mindestens 1 bar, bevorzugt mindestens 10 bar und besonders bevorzugt im Bereich von 50 bis 300 bar,
(h4) einem Hydriergas/Inertgas-Verhältnis im Bereich von 10:1 bis 1:10, bevorzugt von 4:1 bis 1:4 und besonders bevorzugt von 2:1 bis 1:2.

Bevorzugte Ausführungsformen der im erfindungsgemäßen Verfahren beim Hydrieren einzuhaltenden Parameter ergeben sich aus den nachfolgenden Ziffernkombinationen: h1, h2, h3, h4, h1h2, h1h2h3, h1h2h3h4, h2h3, h2h3h4 und h3h4, wobei h1, h1h2 und h1h2h3 bevorzugt und h1h2h3 besonders bevorzugt ist.

Als flüssige Phasen sind Lösungsmittel bevorzugt, die mit dem Amidpolymer eine homogene Lösung bilden, gegenüber den Bedingungen der Hydrierreaktion inert sind und nicht mit dem Reaktionsprodukt reagieren. Hierunter bevorzugt sind Ether wie Diethylether, Dimethoxyether, Diglyine, Triglyme, Tetraglyme, Tetrahydrofuran, Dioxan; Amine wie Diethylamin, Diisopropylamin oder Triethylamin; Kohlenwasserstoffe wie Pentan, Hexan, Heptan oder Cyclohexan; Alkohole wie Methanol, Ethanol, n-Propanol, Isopropanol, n-Butanol, Isobutanol oder tert.-Butanol; oder auch Wasser oder Mischungen aus mindestens zwei davon.

Weiterhin ist es in dem erfindungsgemäßen Verfahren bevorzugt, dass das basische Polymer mindestens eine, vorzugsweise alle, der folgenden Eigenschaften zeigt:
(A) eine Glastemperatur gemäß DIN-EN-ISO 11357 im Bereich von -50 bis 200 °C, bevorzugt von -40 bis 100 °C und besonders bevorzugt von -30 bis 70 °C,
(B) eine gemäß einer nachfolgend beschriebenen Methode bestimmte Schmelztemperatur im Bereich von -30 bis 230°C und bevorzugt von -20 bis 130°C ,
(C) eine Molmasse gemäß DIN 55672-3 von mindestens 1.000 g/mol, bevorzugt im Bereich von 1000 bis 2000000 g/mol und besonders bevorzugt von 10000 bis 1000000 g/mol,
(D) eine Viskosität gemäß ASTM-D 1824/90 bei 20 °C als 20 Gew.-%ige wässrige Lösung von mindestens 30 mPa × s, vorzugsweise im Bereich von 30 mPa × s bis 300000 und besonders bevorzugt von70 bis 100000 mPa × s,
(E) einem Neutralisationsgrad gemäß ERT 470.1-99 im Bereich von 0,1 bis 100 mol-%,
(F) einem pH-Wert gemäß ERT 470.1-99 im Bereich von 5 bis 14,

Gemäß einer bevorzugten Ausführungsform des basischen Polymers, das sich insbesondere als Flockungsmittel oder dessen Bestandteil eignet, das vorzugsweise in der Wasseraufbereitung einsetzbar ist, liegt die Molmasse (C) oberhalb 1000000 g/mol und vorzugsweise im Bereich von 100000 bis 2000000 g/mol oder der Neutralisationsgrad (E) im Bereich von 30 bis 100, vorzugsweise 40 bis 90 mol-%. Hierunter ist als erfindungsgemäße Ausführungsform bei dem Einsatz des basischen Polymers in der Wasseraufbereitung die Kombination von (C) und (E) bevorzugt. Das basische Polymer dieser Ausführungsform eignet sich weiterhin zur Störstofffixierung und Verfestigung, vorzugsweise bei der Papierherstellung

Gemäß einer weiteren bevorzugten Ausführungsform des basischen Polymers, das sich insbesondere als absorbierendes Polymer oder dessen Bestandteil eignet, das bevorzugt in Hygieneartikeln einsetzbar ist, liegt die Molmasse (C) im Bereich von 300000 bis 1000000 g/mol oder der Neutralisationsgrad (E) im Bereich von 0 bis 50 mol-%, vorzugsweise 0 bis 10 mol-%. Hierunter ist als erfindungsgemäße Ausführungsform bei dem Einsatz des basischen Polymers in Hygieneartikeln die Kombination von (C) und (E) bevorzugt.

Gemäß einer anderen bevorzugten Ausführungsform des basischen Polymers, das sich insbesondere als Störstofffixierer oder Verfestiger oder dessen Bestandteil eignet, der bevorzugt in der Papierherstellung einsetzbar ist, liegt die Molmasse (C) im Bereich unter 300000 g/mol und vorzugsweise im Bereich von 30000 bis 300000 g/mol oder der Neutralisationsgrad (E) im Bereich von 30 bis 100 mol%, vorzugsweise 40 bis 90 mol-%. Hierunter ist als erfindungsgemäße Ausführungsform bei dem Einsatz des basischen Polymers in der Störstofffixierung die Kombination von (C) und (E) bevorzugt.

Weiterhin liegt der pH-Wert (F) des basischen Polymers in einem Bereich von 8 bis 13, vorzugsweise von 9 bis 12,5, wenn das basische Polymer als oder zur Herstellung eines absorbierenden Zusammensetzung, vorzugsweise für die Herstellung von Hygieneartikeln, verwendet wird.

Außerdem ist es in einer anderen erfindungsgemäßen Ausführungsform bevorzugt, dass der pH-Wert (F) im Bereich von 5 bis 9, vorzugsweise von 6 bis 8 liegt, wenn das basische Polymer als Hilfsmittel, vorzugsweise als Flockungsmittel, in der Wasserbehandlung und -Aufbereitung eingesetzt wird.

Die sich aus den vorstehenden Eigenschaften ergebenden Eigenschaftskombinationen von zwei oder mehr dieser Eigenschaften stellen jeweils bevorzugte Ausführungsformen des erfindungsgemäßen Verfahrens dar. Weiterhin als erfindungsgemäße Ausführungsformen besonders bevorzugt sind Verfahren, in denen das basische Polymer die nachfolgend als Buchstaben oder Buchstabenkombinationen darstellten Eigenschaften oder Eigenschaftskombinationen zeigt: A, B, C, D, E, F, AB, ABC, ABCD, ABCDE, ABCDEF, BC, BCD, BCDE, BCDEF, CD, CDE, CDEF, CEF, DE, DEF, EF, wobei CEF, DEF oder CDEF bevorzugt und CDEF besonders bevorzugt ist.

Weiterhin betrifft die Erfindung ein basisches Polymer, das aus den vorstehend beschriebenen erfindungsgemäßen Verfahren erhältlich ist.

Zudem betrifft die Erfindung ein Verfahren, in dem in weiteren Schritten:
- das basische Polymere gegebenenfalls mit einer Brönstedt-Säure neutralisiert wird,
- das basische Polymer gegebenenfalls mit einem Vernetzer vernetzt wird,
- das basische Polymer mit einem im Vergleich zu dem basischen Polymer sauren Polymer in Kontakt gebracht wird,
wodurch eine Zusammensetzung (ZM) erhalten wird.

Für den Einsatz der Zusammensetzung (ZM) als Absorptionsmittel für Wasser ist es bevorzugt, dass zumindest das basische oder das saure Polymer, vorzugsweise beide, vernetzt sind. Es ist weiterhin bevorzugt, das basische und das saure Polymer in Verhältnissen zu mischen, so dass die daraus resultierende Zusammensetzung (ZM) einen pH-Wert in einer 0,9 Gew.-%igen wässrigen NaCI-Lösung im Bereich von 4 bis 7, vorzugsweise 5 bis 6 besitzt. In diesem Zusammenhang sind Mischungsverhältnisse von basischem zu saurem Polymer von 1:10 bis 10:1, vorzugsweise 1:2 bis 2:1 bevorzugt. Dieses dient insbesondere einem akzeptablen Tragekomfort des die Zausammensetzung beinhaltenden Hygieneartikels und dessen dermatologischer Verträglichkeit.

Es ist bevorzugt, dass das basische Polymer zumindest 10 und besonders bevorzugt zumindest 50 Mol-%, bezogen auf die basischen Gruppen des basischen Polymers, mit einer Brönstedt-Säure neutralisiert wird. Zu der Neutralisation sind Brönstedt-Säuren wie H₂SO₄, H₃PO₄, HCl, Glycolsäure, Malonsäure oder Bemsteinsäure bevorzugt. Diese Säuren werden vorzugsweise zum Einstellen des Neutralisationsgrades eingesetzt.

Weiterhin kann das vorgenannte basische Polymer oder das neutralisierte Polymer oder deren Mischung vernetzt werden, wodurch ein vernetztes basisches oder ein vernetztes neutralisiertes Polymer erhalten wird.

Als Vernetzer für die basischen Polymere können alle Verbindungen eingesetzt werden, die mit NH-Gruppen, NH₂-Gruppen oder deren Mischungen reagieren können. Bevorzugt sind Diepoxide, insbesondere 1,2:3,4-Diepoxybutane; Dihalogenide, insbesondere α,ω-Alkylendihalogenide, vorzugsweise Ethylendibromid, Porpylendichlorid, Butan-1,4-dijodid; Diisocyanate, insbesondere 2,4-Toluoldiisocyanat und Hexamethylendiisocyanat, Dialdehyde, vorzugsweise Glutaraldehyd; Diester, Diacylchloride oder Dianhydride von Dicarbonsäuren, insbesondere Oxalsäure, Bernsteinsäure, Hexandicarbonsäure, Maleinsäure; Disulfonchloride, vorzugsweise aromatische Disulfonchloride, vorzugsweise Benzoldisulfonchlorid oder Verbindungen mit einer zur Michaelisaddition geeigneten Doppelbindung, vorzugsweise Divinylsulfon, Maleinsäuremonoester, wie auch als Vernetzerklasse III in diesem Text beschrieben.

Für den Einsatz der Zusammensetzung (ZM) als Absorptionsmittel für Wasser ist es bevorzugt, dass zumindest das basische oder das saure Polymer, vorzugsweise beide, vernetzt sind. Es ist bevorzugt, das basische und das saure Polymer in einem Verhältnis zu mischen, das 1 g der daraus resultierende Zusammensetzung (ZM) in einem Liter einer 0,9 Gew.-%igen NaCl-Lösung einen pH-Wert im Bereich von 4 bis 7, vorzugsweise von 5 bis 6 besitzt. In diesem Zusammenhang sind Mischungsverhältnisse von basischem zu saurem Polymer von 1:10 bis 10:1, vorzugsweise von 1:2 bis 2:1, bevorzugt. Es ist weiterhin bevorzugt, dass sowohl das basische Polymer als auch das im Vergleich zum basischen Polymer saure Polymer als Teilchen eingesetzt werden, die eine mittlere Teilchengrösse gemäß ERT 420-1-99 im Bereich von 10 bis 2.000, bevorzugt 100 bis 1.500 und besonders bevorzugt 150 bis 850 µm besitzen. Das in Kontakt bringen erfolgt bevorzugt durch Mischen des basischen Polymers mit dem sauren Polymer, wobei es bevorzugt ist, dass eine homogene Mischung aus basischem und saurem Polymer entsteht. Die Mischbedingungen werden vorzugsweise so gewählt, dass die Teilchen aus basischem und saurem Polymer möglichst nicht beschädigt werden und dadurch eine Staubbildung weitestgehend vermieden wird.

Darüber hinaus betrifft die Erfindung eine Zusammensetzung, die aus dem vorstehenden Verfahren erhältlich ist.

Zudem betrifft die Erfindung eine Zusammensetzung, die das zuvor beschriebene basische Polymer und ein im Vergleich zu dem basischen Polymer saures Polymer beinhaltet.

Gemäß einer Ausführungsform der Erfindung basiert das saure Polymer auf:
(α1) 0,1 bis 99,999 Gew.-%, bevorzugt 20 bis 98,99 Gew.-% und besonders bevorzugt 30 bis 95,95 Gew.-% polymerisierten, ethylenisch ungesättigten, säuregruppenhaltigen Monomeren oder deren Salze, wobei Acrylsäure bevorzugt ist,
(α2) 0 bis 70 Gew.-%, bevorzugt 1 bis 60 Gew.-% und besonders bevorzugt 1 bis 40 Gew.-% polymerisierten, ethylenisch ungesättigten, mit (α1) copolymerisierbaren Monomeren,
(α3) 0,001 bis 10 Gew.-%, bevorzugt 0,01 bis 7 Gew.-% und besonders bevorzugt 0,05 bis 5 Gew.-% eines oder mehrerer Vernetzer,
(α4) 0 bis 20 Gew.-%, bevorzugt 0,01 bis 7 Gew.-% und besonders bevorzugt 0,05 bis 5 Gew.-% eines oder mehrerer Hilfsstoffe, wobei die Summe der Gewichtsmengen (α1) bis (α4) 100 Gew.-% beträgt.

Die monoethylenisch ungesättigten, säuregruppenhaltigen Monomere (α1) können teilweise oder vollständig, bevorzugt teilweise neutralisiert sein. Vorzugsweise sind die monoethylenisch ungesättigten, säuregruppenhaltigen Monomere zu höchstens 25 mol-%, besonders bevorzugt zu höchstens 20 mol-% und darüber hinaus bevorzugt zu höchstens 10 mol-% neutralisiert. Die Neutralisation der Monomere (α1) kann vor oder auch nach der Polymerisation erfolgen. Ferner kann die Neutralisation mit Alkalimetallhydroxiden, Erdalkalimetallhydroxiden, Ammoniak sowie Carbonaten und Bicarbonaten erfolgen. Daneben ist jede weitere Base denkbar, die mit der Säure ein wasserlösliches Salz bildet. Auch eine Mischneutralisation mit verschiedenen Basen ist denkbar. Bevorzugt ist die Neutralisation mit Ammoniak oder mit Alkalimetallhydroxiden, besonders bevorzugt mit Natriumhydroxid oder mit Ammoniak.

Bevorzugte monoethylenisch ungesättigte, säuregruppenhaltige Monomere (α1) sind Acrylsäure, Methacrylsäure, Ethacrylsäure, α-Chloracrylsäure, α-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, Itaconsäure, Citraconsäure, Mesaconsäure, Aconitsäure, Maleinsäure, Fumarsäure, Tricarboxyethylen und Maleinsäureanhydrid, wobei Acrylsäure sowie Methacrylsäure besonders und Acrylsäure darüber hinaus bevorzugt sind.

Neben diesen carboxylatgruppenhaltigen Monomeren sind als monoethylenisch ungesättigte, säuregruppenhaltige Monomere (α1) des Weiteren ethylenisch ungesättigte Sulfonsäuremonomere oder ethylenisch ungesättigte Phosphonsäuremonomere bevorzugt.

Ethylenisch ungesättigte Sulfonsäuremonomere sind Allylsulfonsäure oder aliphatische oder aromatische Vinylsulfonsäuren oder acrylische oder methacrylische Sulfonsäuren bevorzugt. Als aliphatische oder aromatische Vinylsulfonsäuren sind Vinylsulfonsäure, 4-Vinylbenzylsulfonsäure, Vinyltoluolsulfonsäure und Stryrolsulfonsäure bevorzugt. Als Acryl- bzw. Methacrylsulfonsäuren sind Sulfoethyl(meth)acrylat, Sulfopropyl(meth)acrylat und, 2-Hydroxy-3-methacryloxypropylsulfonsäure. Als (Meth)Acrylamidoalkylsulfonsäure ist 2-Acrylamido-2-methylpropansulfonsäure bevorzugt.

Ferner sind ethylenisch ungesättigte Phosphonsäuremonomere, wie Vinylphosphonsäure, Allylphosphonsäure, Vinylbenzylphosponsäure, (Meth)acrylamidoalkylphosphonsäuren, Acrylamidoalkyldiphosphonsäuren, phosponomethylierte Vinylamine und (Meth)acrylphosphonsäurederivate bevorzugt.

Es ist erfindungsgemäß bevorzugt, dass das Polymer zu mindestens 50 Gew.-%, vorzugsweise zu mindestens 70 Gew.-% und darüber hinaus bevorzugt zu mindestens 90 Gew.-% aus carboxylgruppenhaltigen Monomeren besteht. Es ist erfindungsgemäß besonders bevorzugt, dass das Polymer zu mindestens 50 Gew.-%, vorzugsweise zu mindestens 70 Gew.-% aus Acrylsäure besteht, die vorzugsweise zu höchstens 50 mol-%, besonders bevorzugt zu höchstens 20 mol-% neutralisiert ist.

Als monoethylenisch ungesättigte, mit (α1) copolymerisierbare Monomere (α2) sind Acrylamide und Methacrylamide bevorzugt.

Mögliche (Meth)acrylamide sind neben Acrylamid und Methacrylamid alkylsubstituierte (Meth)acrylamide oder aminoalkylsubstituierte Derivate des (Meth)acrylamids, wie N-Methylol(meth)acrylamid, N,N-Dimethylamino-(meth)acrylamid, Dimethyl(meth)acrylamid oder Diethyl(meth)acrylamid Mögliche Vinylamide sind beispielsweise N-Vinylamide, N-Vinylformamide, N-Vinylacetamide, N-Vinyl-N-Methylacetamide, N-Vinyl-N-methylformamide, Vinylpyrrolidon. Unter diesen Monomeren besonders bevorzugt ist Acrylamid.

Des Weiteren sind als monoethylenisch ungesättigte, mit (α1) copolymerisierbaren Monomere (α2) in Wasser dispergierbare Monomere bevorzugt. Als in Wasser dispergierbare Monomere sind Acrylsäurester und Methacrylsäurester, wie Methyl(meth)acrylat, Ethyl(meth)acrylat, Propyl(meth)acrylat oder Butyl(meth)acrylat, sowie Vinylacetat, Styrol und Isobutylen bevorzugt.

Erfindungsgemäß bevorzugte Vernetzer (α3) sind Verbindungen, die mindestens zwei ethylenisch ungesättigte Gruppen innerhalb eines Moleküls aufweisen (Vernetzerklasse I), Verbindungen, die mindestens zwei funktionelle Gruppen aufweisen, die mit funktionellen Gruppen der Monomeren (α1) oder (α2) in einer Kondensationsreaktion (=Kondensationsvernetzer), in einer Additionsreaktion oder in einer Ringöffnungsreaktion reagieren können (Vernetzerklasse II), Verbindungen, die mindestens eine ethylenisch ungesättigte Gruppe und mindestens eine funktionelle Gruppe, die mit funktionellen Gruppen der Monomeren (α1) oder (α2) in einer Kondensationsreaktion, in einer Additionsreaktion oder in einer Ringöffnungsreaktion reagieren kann (Vernetzerklasse III), aufweisen, oder polyvalente Metallkationen (Vernetzerklasse IV). Dabei wird durch die Verbindungen der Vernetzerklasse I eine Vernetzung der Polymere durch die radikalische Polymerisation der ethylenisch ungesättigten Gruppen des Vernetzermoleküls mit den monoethylenisch ungesättigten Monomeren (α1) oder (α2) erreicht, während bei den Verbindungen der Vernetzerklasse II und den polyvalenten Metallkationen der Vernetzerklasse IV eine Vernetzung der Polymere durch Kondensationsreaktion der funktionellen Gruppen (Vernetzerklasse II) bzw. durch elektrostatische Wechselwirkung des polyvalenten Metallkations (Vernetzerklasse IV) mit den funktionellen Gruppen der Monomere (α1) oder (α2) erreicht wird. Bei den Verbindungen der Vernetzerklasse III erfolgt dementsprechend eine Vernetzung des Polymers sowohl durch radikalische Polymerisation der ethylenisch ungesättigten Gruppe als auch durch Kondensationsreaktion zwischen der funktionellen Gruppe des Vernetzers und den funktionellen Gruppen der Monomeren (α1) oder (α2).

Bevorzugte Verbindungen der Vernetzerklasse I sind Poly(meth)acrylsäureester, die beispielsweise durch die Umsetzung eines Polyols, wie beispielsweise Ethylenglykol, Propylenglykol, Trimethylolpropan, 1,6-Hexandiol, Glycerin, Pentaerythrit, Polyethylenglykol oder Polypropylenglykol, eines Aminoalkohols, eines Polyalkylenpolyaminens, wie beispielsweise Diethylentriamin oder Triethylentetraamin, oder eines alkoxylierten Polyols mit Acrylsäure oder Methacrylsäure, vorzugsweise deren Säurehalogeniden, gewonnen werden. Als Verbindungen der Vernetzerklasse I sind des Weiteren Polyvinylverbindungen, Poly(meth)allyverbindungen, (Meth)acrylsäureester einer Monovinylverbindung oder (Meth)acrylsäureester einer Mono(meth)-allylverbindung, vorzugsweise der Mono(meth)allylverbindungen eines Polyols oder eines Aminoalkohols, bevorzugt. In diesem Zusammenhang wird auf DE 195 43 366 und DE 195 43 368 verwiesen. Die Offenbarungen werden hiermit als Referenz eingeführt und gelten somit als Teil der Offenbarung.

Als Verbindungen der Vernetzerklasse I seien als Beispiel genannt Alkenyldi(meth)acrylate, beispielsweise Ethylenglykoldi(meth)acrylat, 1,3-Propylenglykoldi(meth)acrylat, 1,4-Butylenglykoldi(meth)acrylat, 1,3-Butylenglykoldi(meth)acrylat, 1,6-Hexandioldi(meth)acrylat, 1,10-Decandioldi(meth)acrylat, 1,12-Dodecandioldi(meth)acrylat, 1,18-Octadecandioldi(meth)acrylat, Cyclopentandioldi(meth)acrylat, Neopentylglykoldi(meth)acrylat, oder Pentaerythritdi(meth)acrylat, Alkenyldi(meth)acrylamide, beispielsweise N-Methyldi(meth)acrylamid, N,N'-3-Methylbutylidenbis(meth)acrylamid, N,N'-(1,2-Di-hydroxyethylen)bis(meth)acrylamid, N,N'-Hexamethylenbis(meth)acrylamid oder N,N'-Methylenbis(meth)acrylamid, Polyalkoxydi(meth)acrylate, beispielsweise Diethylenglykoldi(meth)acrylat, Triethylenglykoldi(meth)acrylat, Tetraethylenglykoldi(meth)acrylat, Dipropylenglykoldi(meth)acrylat, Tripropylenglykoldi(meth)acrylat oder Tetrapropylenglykoldi(meth)acrylat, Bisphenol-A-di(meth)acrylat, ethoxyliertes Bisphenol-A-di(meth)acrylat, Benzylidindi(meth)acrylat, 1,3-Di(meth)acryloyloxy-propanol-2, Hydrochinondi(meth)-acrylat, Di(meth)acrylatester des vorzugsweise mit 1 bis 30 Mol Alkylenoxid pro Hydroxylgruppe oxyalkylierten, vorzugsweise ethoxylierten Trimethylolpropans, Thioethylenglykoldi(meth)acrylat, Thiopropylenglykoldi(meth)acrylat, Thiopolyethylenglykoldi(meth)acrylat, Thiopolypropylenglykoldi(meth)acrylat, Divinylether, beispielsweise 1,4-Butandioldivinylether, Divinylester, beispielsweise Divinyladipat, Alkandiene, beispielsweise Butadien oder 1,6-Hexadien, Divinylbenzol, Di(meth)allylverbindungen, beispielsweise Di(meth)allylphthalat oder Di(meth)allylsuccinat, Diethyl(meth)allylaminomethyl(meth)acrylatammoniumchlorid, Vinyl-(meth)-acryl-Verbindungen, beispielsweise Vinyl(meth)acrylat, (Meth)allyl-(meth)acryl-Verbindungen, beispielsweise (Meth)allyl(meth)acrylat, mit 1 bis 30 Mol Ethylenoxid pro Hydroxylgruppe ethoxyliertes (Meth)allyl(meth)acrylat, Di(meth)allylester von Polycarbonsäuren, beispielsweise Di(meth)allylmaleat, Di(meth)allyfumarat, Di(meth)allylsuccinat oder Di(meth)allylterephthalat, Verbindungen mit 3 oder mehr ethylenisch ungesättigten, radikalisch polymerisierbaren Gruppen wie beispielsweise Glycerintri(meth)acrylat, (Meth)acrylatester des mit vorzugsweise 1 bis 30 Mol Ethylenoxid pro Hydroxylgruppe oxyethylierten Glycerins, Trimethylolpropantri(meth)acrylat, Tri(meth)acrylatester des vorzugsweise mit 1 bis 30 Mol Alkylenoxid pro Hydroxylgruppe oxyalkylierten, vorzugsweise ethoxylierten Trimethylolpropans, (Meth)-allylidendi(meth)acrylat, 3-Allyloxy-1,2-propandioldi(meth)acrylat, Tri(meth)-allylcyanurat, Tri(meth)allylisocyanurat, Pentaerythrittetra(meth)acrylat, Pentaerythrittri(meth)acrylat, (Meth)acrylsäureester des mit vorzugsweise 1 bis 30 Mol Ethylenoxid pro Hydroxylgruppe oxyethylierten Pentaerythrits, Tris(2-hydroxyethyl)isocyanurattri(meth)acrylat, Trivinyltrimellitat, Tri(meth)allylamin, Tri(meth)-allylphosphat Tetra(meth)allylethylendiamin, Poly(meth)allylester, Tetra(meth)-allyloxiethan oder Tetra(meth)allylammoniumhalide.

Als Verbindung der Vernetzerklasse II sind Verbindungen bevorzugt, die mindestens zwei funktionelle Gruppen aufweisen, die in einer Kondensationsreaktion (=Kondensationsvernetzer), in einer Additionsreaktion oder in einer Ringöffnungsreaktion mit den funktionellen Gruppen der Monomere (α1) oder (α2), bevorzugt mit Säuregruppen, der Monomeren (α1), reagieren können. Bei diesen funktionellen Gruppen der Verbindungen der Vernetzerklasse II handelt es sich vorzugsweise um Alkohol-, Amin-, Aldehyd-, Glycidyl-, Isocyanat-, Carbonat- oder Epichlorfunktionen.

Als Verbindung der Vernetzerklasse II seien als Beispiele genannt Polyole, beispielsweise Ethylenglykol, Polethylenglykole wie Diethylenglykol, Triethylenglykol und Tetraethylenglykol, Propylenglykol, Polypropylenglykole wie Dipropylenglykol, Tripropylenglykol oder Tetrapropylenglykol, 1,3-Butandiol, 1,4-Butandiol, 1,5-Pentandiol, 2,4-Pentandiol, 1,6-Hexandiol, 2,5-Hexandiol, Glycerin, Polyglycerin, Trimethylolpropan, Polyoxypropylen, Oxyethylen-Oxypropylen-Blockcopolymere, Sorbitanfettsäureester, Polyoxyethylensorbitanfettsäureester, Pentaerythrit, Polyvinylalkohol und Sorbitol, Aminoalkohole, beispielsweise Ethanolamin, Diethanolamin, Triethanolamin oder Propanolamin, Polyaminverbindungen, beispielsweise Ethylendiamin, Diethylentriaamin, Triethylentetraamin, Tetraethylenpentaamin oder Pentaethylenhexaamin, Polyglycidylether-Verbindungen wie Ethylenglykoldiglycidylether, Polyethylenglykoldiglycidylether, Glycerindiglycidylether, Glycerinpolyglycidylether, Pentareritritpolyglycidylether, Propylenglykoldiglycidylether Polypropylenglykoldiglycidylether, Neopentylglykoldiglycidylether, Hexandiolglycidylether, Trimethylolpropanpolyglycidylether, Sorbitolpolyglycidylether, Phtahlsäurediglycidylester, Adipinsäurediglycidylether, 1,4-Phenylen-bis(2-oxazolin), Glycidol, Polyisocyanate, vorzugsweise Diisocyanate wie 2,4-Toluoldiisocyanat und Hexamethylendiisocyanat, Polyaziridin-Verbindungen wie 2,2-Bishydroxymethylbutanol-tris[3-(1-aziridinyl)propionat], 1,6-Hexamethylendiethylenharnstoff und Diphenylmethan-bis-4,4'-N,N'-diethylenharnstoff, Halogenepoxide beispielsweise Epichlor- und Epibromhydrin und α-Methylepichlorhydrin, Alkylencarbonate wie 1,3-Dioxolan-2-on (Ethylencarbonat), 4-Methyl-1,3-dioxolan-2-on (Propylencarbonat), 4,5-Dimethyl-1,3-dioxolan-2-on, 4,4-Dimethyl-1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, 1,3-Dioxolan-2-on, Poly-1,3-dioxolan-2-on, polyquartäre Amine wie Kondensationsprodukte von Dimethylaminen und Epichlorhydrin. Als Verbindungen der Vernetzerklasse II sind des weiteren Polyoxazoline wie 1,2-Ethylenbisoxazolin, Vernetzer mit Silangruppen wie γ-Glycidoxypropyltrimethoxysilan und γ-Aminopropyltrimethoxysilan, Oxazolidinone wie 2-Oxazolidinon, Bis- und Poly-2-oxazolidinone und Diglykolsilikate bevorzugt.

Als Verbindungen der Vernetzerklasse III sind hydroxyl- oder aminogruppenhaltige Ester der (Meth)acrylsäure, wie beispielsweise 2-Hydroxyethyl(meth)acrylat, sowie hydroxyl- oder aminogruppenhaltige (Meth)acrylamide, oder Mono(meth)allylverbindungen von Diolen bevorzugt.

Die polyvalenten Metallkationen der Vernetzerklasse IV leiten sich vorzugsweise von mehrwertigen Kationen ab. Bevorzugte zweiwertige Kationen leiten sich von Zink, Beryllium, Erdalkalimetallen, wie Magnesium, Calcium, Strontium ab, wobei Magnesium bevorzugt wird. Weiter erfindungsgemäß einsetzbare höherwertige Kationen sind Kationen von Aluminium, Eisen, Chrom, Mangan, Titan, Zirkonium und andere Übergangsmetalle sowie Doppelsalze solcher Kationen oder Mischungen der genannten Salze. Bevorzugt werden Aluminiumsalze und Alaune und deren unterschiedliche Hydrate wie z. B. AlCl₃ × 6H₂O, NaAl(SO₄)₂ × 12 H2O, KAl(SO₄)₂ × 12 H₂O oder Al₂(SO₄)₃×14-18 H₂O eingesetzt.

Besonders bevorzugt werden Al₂(SO₄)₃ und seine Hydrate als Vernetzer der Vernetzungsklasse IV verwendet.

Bevorzugte Polymere sind Polymere, die durch Vernetzer der folgenden Vemetzerklassen bzw. durch Vernetzer der folgenden Kombinationen von Vemetzerklassen vernetzt sind: I, II, III, IV, I II, I III, I IV, I II III, I II IV, I III IV, II III IV, II IV oder III IV. Die vorstehenden Kombinationen von Vemetzerklassen stellen jeweils eine bevorzugte Ausführungsform von Vemetzem eines Polymer dar.

Weitere bevorzugte Ausführungsformen der Polymere sind Polymere, die durch einen beliebigen der vorstehend genannten Vernetzer der Vemetzerklassen I vernetzt sind. Unter diesen sind wasserlösliche Vernetzer bevorzugt. In diesem Zusammenhang sind N,N'-Methylenbisacrylamid, Polyethylenglykoldi(meth)acrylate, Triallylmethylammoniumchlorid, Tetraallylammoniumchlorid sowie mit 9 Mol Ethylenoxid pro Mol Acrylsäure hergestelltes Allylnonaethylenglykolacrylat besonders bevorzugt.

Weiterhin ist es in einer erfindungsgemäßen Ausführungsform bevorzugt, dass das saure Polymer nach der ersten, in der Regel während der Polymerisation erfolgenden Vernetzung, ein weiteres mal durch sogenannte "Nachvernetzer" vernetzt wird. Als Nachvernetzer bevorzugt sind die im Zusammenhang mit den Vernetzern (α3) genannten Verbindungen der Vernetzerklasse II und IV.

Gleichfalls ist es bevorzugt, dass das basische Polymer durch die vorstehend als für das basische Polymer geeignet beschriebenen Vernetzer nachvernetzt wird. Hierbei ist im Gegensatz zur ersten Vernetzung eine Vernetzung des Oberflächenbereichs bevorzugt.

Unter diesen Verbindungen sind als Nachvernetzer besonders bevorzugt Diethylenglykol, Triethylenglykol, Polyethylenglykol, Glyzerin, Polyglyzerin, Propylenglykol, Diethanolamin, Triethanolamin, Polyoxypropylen, Oxyethylen-Oxypropylen-Blockcopolymere, Sorbitanfettsäureester, Polyoxyethylensorbitanfettsäureester, Trimethylolpropan, Pentaerytrit, Polyvinylalkohol, Sorbitol, 1,3-Dioxolan-2-on (Ethylencarbonat), 4-Methyl-1,3-dioxolan-2-on (Propylencarbonat), 4,5-Dimethyl-1,3-dioxolan-2-on, 4,4-Dimethyl-1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, 1,3-Dioxolan-2-on, Poly-1,3-dioxolan-2-on.

Besonders bevorzugt wird Ethylencarbonat als Nachvernetzer eingesetzt.

Bevorzugte Ausführungsformen der sauren Polymere sind diejenigen, die durch Vernetzer der folgenden Vernetzerklassen bzw. durch Vernetzer der folgenden Kombinationen von Vernetzerklassen nachvernetzt sind: II, IV und II IV.

Weitere bevorzugte Ausführungsformen der sauren Polymere sind diejenigen, die durch einen beliebigen der vorstehend in den Vemetzerklassen II oder IV genannten Vernetzer nachvernetzt sind.

Als Hiifsstoffe (α4) werden vorzugsweise Stellmittel, Geruchsbinder, oberflächenaktive Mittel oder Antioxidatien eingesetzt.

Aus den vorgenannten Monomeren und Vernetzern lässt sich das saure Polymer oder auch das Amidpolymer durch verschiedene Polymerisationsweisen herstellen. Beispielsweise sind in diesem Zusammenhang Massepolymerisation, die vorzugsweise in Knetreaktoren wie Extrudern oder durch Bandpolymerisation erfolgt, Lösungspolymerisation, Spraypolymerisation, inverse Emulsionspolymerisation und inverse Suspensionspolymerisation zu nennen. Bevorzugt wird die Lösungspolymerisation in Wasser als Lösungsmittel durchgeführt. Die Lösungspolymerisation kann kontinuierlich oder diskontinuierlich erfolgen. Aus dem Stand der Technik ist ein breites Spektrum von Variationsmöglichkeiten hinsichtlich Reaktionsverhältnisse wie Temperaturen, Art und Menge der Initiatoren als auch der Reaktionslösung zu entnehmen. Typische Verfahren sind in den folgenden Patentschriften beschrieben: US 4,286,082, DE 27 06 135, US 4,076,663, DE 35 03 458, DE 40 20 780, DE 42 44 548, DE 43 23 001, DE 43 33 056, DE 44 18 818. Die Offenbarungen werden hiermit als Referenz eingeführt und gelten somit als Teil der Offenbarung.

Vorzugsweise erfolgt die Synthese der sauren Polymere oder der Amidpolymere durch radikalische Polymerisation, die durch Polymerisationsinitiatoren gestartet wird. Polymerisationsinitiatoren können in einer Lösung erfindungsgemäßer Monomere gelöst oder dispergiert enthalten sein. Als Initiatoren kommen sämtliche dem Fachmann bekannte in Radikale zerfallende Verbindungen in Betracht. Hierunter fallen insbesondere Peroxide, Hydroperoxide, Wasserstoffperoxid, Persulfate, Azoverbindungen sowie die sogenannten Redoxkatalysatoren. Bevorzugt ist der Einsatz wasserlöslicher Katalysatoren. In manchen Fällen ist es vorteilhaft, Mischungen verschiedener Polymerisationsinitiatoren zu verwenden. Unter diesen Mischungen sind die aus Wasserstoffperoxid und Natrium- oder Kaliumperoxodisulfat bevorzugt, die in jedem denkbaren Mengenverhältnis eingesetzt werden können. Geeignete organische Peroxide sind vorzugsweise Acetylacetonperoxid, Methylethylketonperoxid, t-Butylhydroperoxid, Cumolhydroperoxid, t-Amylperpivalat, t-Butylperpivalat, t-Butylperneohexonat, t-Butylisobutyrat, t-Butylper-2-ethylhexenoat, t-Butylperisononanoat, t-Butylpermaleat, t-Butylperbenzoat, t-Butyl-3,5,5-tri-methylhexanoat und Amylperneodekanoat. Weiterhin sind als Polymerisationsinitiatoren bevorzugt: Azo-Verbindungen, wie 2,2'-Azobis-(2-amidinopropan)dihydrochlorid, 2,2'-Azobis-(N,N-dimethylen)isobutyramidindihydrochlorid, 2-(Carbamoylazo)isobutyronitril und 4,4'-Azobis-(4-cyanovaleriansäure). Die genannten Verbindungen werden in üblichen Mengen eingesetzt, vorzugsweise in einem Bereich von 0,01 bis 5, bevorzugt von 0,1 bis 2 Mol-%, jeweils bezogen auf die Menge der zu polymerisierenden Monomere.

Die Redoxkatalysatoren enthalten als oxidische Komponente mindestens eine der oben angegebenen Perverbindungen und als reduzierende Komponente vorzugsweise Ascorbinsäue, Glukose, Sorbose, Manose, Ammonium- oder Alkalimetallhydrogensulfit, -thiosulfat, -hyposulfit oder -sulfid, Metallsalze, wie Eisen-IIionen oder Silberionen oder Natriumhydroxymethylsulfoxylat. Vorzugsweise wird als reduzierende Komponente des Redoxkatalysators Ascorbinsäure oder Natriumpyrosulfit verwendet. Bezogen auf die bei der Polymerisation eingesetzte Menge an Monomeren wird 1×10⁻⁵ bis 1 Mol-% der reduzierenden Komponente des Redoxkatalysators und 1×10⁻⁵ bis 5 Mol-% der oxidierenden Komponente des Redoxkatalysators eingesetzt. Anstelle der oxidierenden Komponente des Redoxkatalysators, oder in Ergänzung zu diesem, können ein oder mehrere, vorzugsweise wasserlösliche, Azoverbindungen verwendet werden.

Bevorzugt wird erfindungsgemäß ein Redoxsystem bestehend aus Wassersoffperoxid, Natriumperoxodisulfat und Ascorbinsäure eingesetzt. Allgemein sind erfindungsgemäß Azoverbindungen als Initiatoren bevorzugt, wobei Azo-bisamidinopropan-dihydrochlord besonders bevorzugt ist. In der Regel wird die Polymerisation mit den Initiatoren in einem Temperaturbereich von 0 bis 90°C, bevorzugt von 0 bis 20°C initiiert.

Zudem ist es bevorzugt, dass das saure vernetzte Polymer mindestens eine, vorzugsweise alle, der nachfolgenden Eigenschaften aufweist:
(s1) eine Free Swell Capacity nach ERT 440.1-99 im Bereich von 1 bis 30, bevorzugt von 1,2 bis 10 g/g;
(s2) einen pH-Wert in einer 1%igen wässrigen Lösung im Bereich von 2 bis 6, bevorzugt von 2 bis 4.

Ferner ist erfindungsgemäß eine Zusammensetzung (ZM) bevorzugt, die mindestens eine, vorzugsweise alle, der folgenden Eigenschaften zeigt:
(a) eine Absorption under Load bei einem Druck von 0,9 psi gemäß der in EP 339 461 A1 offenbarte Methode (AUL0,9psi) im Bereich von 10 bis 30, bevorzugt von 15 bis 28 und besonders bevorzugt von 18 bis 25 g/g,
(b) eine Absorption under Load bei einem Druck von 1,5 psi gemäß der in EP 339 461 A1 offenbarte Methode (AUL1,5psi) im Bereich von 10 bis 28, bevorzugt von 13 bis 25 und besonders bevorzugt von 15 bis 22 g/g,
(c) eine Absorption against Pressure bei einem Druck von 0,3 psi über 1 h gemäß ERT 442.1-99 (AAP0,3psi/1h) im Bereich von 20 bis 50, bevorzugt von 25 bis 40 und besonders bevorzugt von 26 bis 35 g/g,
(d) eine Absorption against Pressure bei einem Druck von 0,3 psi über 4 h gemäß ERT 442.1-99 (AAP0,3psi/4h) im Bereich von 25 bis 50, bevorzugt von 27 bis 45 und besonders bevorzugt von 29 bis 42 g/g,
(e) eine Absorption against Pressure bei einem Druck von 0,7 psi über 1 h gemäß ERT 442.1-99 (AAP0,7psi/1h) im Bereich von 14 bis 40, bevorzugt von 16 bis 38 und besonders bevorzugt von 18 bis 35 g/g,
(f) eine Absorption against Pressure bei einem Druck von 0,7 psi über 4 h gemäß ERT 442.1-99 (AAP0,7psi/4h) im Bereich von 15 bis 45, bevorzugt von 17 bis 42 und besonders bevorzugt von 23 bis 40 g/g,
(g) eine Performance under Pressure bei einem Druck von 1,5 psi über 1 h gemessen gemäß WO95/26209 (PUP1,5 psi/1h) im Bereich von 10 bis 35, bevorzugt 13 bis 30 und besonders bevorzugt 15 bis 27 g/g,
(h) eine Performance under Pressure bei einem Druck von 1,5 psi über 4 h gemessen gemäß WO95/26209 (PUP 1,5 psi/ 4h) im Bereich von 20 bis 50, bevorzugt 25 bis 45 und besonders bevorzugt 28 bis 42 g/g,
(g) eine Performance under Pressure bei einem Druck von 0,7 psi über 1 h gemessen gemäß WO95/26209 (PUP0,7psi/1h) im Bereich von 20 bis 50, bevorzugt von 22 bis 45 und besonders bevorzugt von 25 bis 40 g/g,
(h) eine Perfonnance under Pressure bei einem Druck von 0,7 psi über 2 h gemessen gemäß WO95/26209 (PUP0,7psi/2h) im Bereich von 25 bis 60, bevorzugt von 35 bis 57 und besonders bevorzugt von 40 bis 55 g/g,
(i) eine Performance under Pressure bei einem Druck von 0,7 psi über 3 h gemessen gemäß WO95/26209 (PUP0,7psi/3h) im Bereich von 30 bis 65, bevorzugt von 35 bis 63 und besonders bevorzugt von 40 bis 60 g/g,
(j) eine Performance under Pressure bei einem Druck von 0,7 psi über 4 h gemessen gemäß WO95/26209 (PUP0,7psi/4h) im Bereich von 30 bis 70, bevorzugt von 35 bis 63 und besonders bevorzugt von 40 bis 60 g/g,
(k) eine Saline Flow Conductivity gemessen gemäß WO95/22356 (SFC) im Bereich von 30 × 10⁻⁷ bis 900, × 10⁻⁷ bevorzugt von 50 × 10⁻⁷ bis 700 × 10-7 und besonders bevorzugt von 70 × 10⁻⁷ bis 500 × 10⁻⁷ cm³ × s/g,
(l) eine Particle Size Distribution gemäß ERT 420.1-99 (PSD) im Bereich von 10 bis 1200, bevorzugt von 50 bis 900 und besonders bevorzugt von 150 bis 850 µm.

Die sich aus den vorstehenden Eigenschaften ergebenden Eigenschaftskombinationen von zwei oder mehr dieser Eigenschaften stellen jeweils bevorzugte Ausführungsformen des erfindungsgemäßen Verfahrens dar. Weiterhin als erfindungsgemäße Ausführungsformen besonders bevorzugt sind Verfahren, in denen die Zusammensetzung die nachfolgend als Buchstaben oder Buchstabenkombinationen darstellten Eigenschaften oder Eigenschaftskombinationen zeigt: a, b, ab, df, ef, il, abm, dfm, efm, ilm, dfhlm.

Ferner ist eine Ausführungsform des erfindungsgemäßen Verfahrens bevorzugt, in der in einem weiteren Schritt durch in Kontakt bringen der Zusammensetzung (ZM) oder des basischen Polymers oder beides mit einem Substrat ein Verbund entsteht. Zudem betrifft die Erfindung einen Verbund, der durch das erfindungsgemäße Verfahren erhältlich ist.

Gemäß einer erfindungsgemäßen Ausführung form des erfindungsgemäßen Verfahrens, der erfindungsgemäßen basischen Polymere sowie der erfindungsgemäßen Zusammensetzung ist es bevorzugt, dass die nur mit einer Untergrenze angegebenen Werte von erfindungsgemäßen Merkmalen eine Obergrenze besitzen, die das 20-fache, vorzugsweise das 10-fache und besonders bevorzugt das 5-fache des am meisten bevorzugten Wertes der Untergrenze besitzen.

Darüber hinaus betrifft die Erfindung einen Verbund, der das zuvor beschriebene basische Polymer oder die zuvor beschriebene Zusammensetzung (ZM) und ein Substrat beinhaltet, wobei das basische Polymer bzw. die Zusammensetzung (ZM) und das Substrat vorzugsweise fest miteinander verbunden sind. Als Substrate sind Folien aus Polymeren, wie beispielsweise aus Polyethylen, Polypropylen oder Polyamid, Metalle, Vliese, Fluff, Tissues, Gewebe, natürliche oder synthetische Fasern, oder andere Schäume bevorzugt.

Erfindungsgemäß sind als Verbund Dichtungsmaterialien, Kabel, absorbierende Cores sowie diese beinhaltende Windeln und Hygieneartikel bevorzugt.

Bei den Dichtungsmaterialien handelt es sich vorzugsweise um wasserabsorbierende Flächengebilde, vorzugsweise Filme, worin das zuvor beschriebene basische Polymer oder die zuvor beschriebene Zusammensetzung in einer Polymermatrix oder Fasermatrix als Substrat eingearbeitet ist. Dieses erfolgt vorzugsweise dadurch, dass das basische Polymer oder die Zusammensetzung mit einem die Polymer- oder Fasermatrix bildenden Polymer (Pm) gemischt und anschliessend durch gegebenenfalls thermische Behandlung verbunden wird. Für den Fall, dass das basische Polymer oder die Zusammensetzung als Faser eingesetzt wird, können daraus Garne gewonnen werden, die mit weiteren aus einem anderen Material bestehenden Fasern als Substrat versponnen und dann beispielsweise über Verweben oder Verstricken miteinander verbunden werden oder direkt, d. h. ohne mit weiteren Fasern versponnen zu werden, verbunden werden. Typische Verfahren hierzu sind bei H. Savano et al., International Wire & Cabel Symposium Proceedings 40,333 bis 338 (1991); M. Fukuma et al., International Wire & Cabel Symposium Proceedings, 36,350 bis 355 (1987) und in US 4,703,132 beschrieben.

In der Ausführungsform, in der der Verbund ein Kabel ist, können das basische Polymer oder die Zusammensetzung (ZM) als Teilchen direkt, vorzugsweise unter der Isolierung des Kabels eingesetzt werden. In einer anderen Ausführungsform des Kabels können das basische Polymer oder die Zusammensetzung (ZM) in Form von quellbaren, somit das Eindringen von Wasser erschwerenden, und vorzugsweise zugfesten Garnen eingesetzt werden. Gemäß einer anderen Ausführungsform des Kabels, können das basische Polymer oder die Zusammensetzung (ZM) als quellbarer Film eingesetzt werden. Wiederum in einer anderen Ausführungsform des Kabels können das basische Polymer oder die Zusammensetzung (ZM) als feuchtigkeitsabsorbierende Seele in einem Kabel eingesetzt werden. Das Substrat bildet im Fall des Kabels alle Bestandteile des Kabels, die kein basisches Polymer oder keine Zusammensetzung (ZM) enthalten. Hierunter fallen beispielsweise die in dem Kabel eingebauten Leiter, wie elektrische Leiter oder Lichtleiter, optische bzw. elektrische Isoliermittel sowie Bestandteile des Kabels, die die mechanische Beanspruchbarkeit des Kabels gewährleisten, wie Geflechte, Gewebe oder Gewirke aus zugfesten Materialien wie Kunststoffen, Glasfasern und Isolierungen aus Gummi oder anderen Materialien, die die Zerstörung der Außenhaut des Kabels verhindern.

Wenn der Verbund ein absorbierendes Core ist, sind das basische Polymer oder die Zusammensetzung (ZM) in ein Substrat eingearbeitet. Bei diesem Substrat handelt es sich vorzugsweise um Fasermaterialien. Fasernmaterialien, die in der vorliegenden Erfindung verwendet werden können, umfassen natürlich vorkommende Fasern (modifiziert oder nicht modifiziert) als auch synthetische Fasern. Beispiele geeigneter nicht modifizierter und modifizierter natürlich vorkommender Fasern umfassen Baumwolle, Espartogras, Zuckerrohr, Grannenhaar, Flachs, Seide, Wolle, Zellstoff, chemisch modifizierter Zellstoff, Jute, Reyon, Ethylzellulose und Zelluloseacetat, Geeignete synthetische Fasern können aus Polyvinylchlorid, Polyvinylfluorid, Polytetrafluorethylen, Polyvinylidenchlorid, Polyacrylat wie Orion® , Polyvinylacetat, Polyethylvinylacetat, nicht löslichem oder löslichem Polyvinylalkohol, Polyolefine, wie Polyethylen (beispielsweise PULPEX® ) und Polypropylenen, Polyamiden, wie Nylon, Polyestem wie DACRON® oder Kodel® , Polyurethanen, Polystyrenen und dergleichen hergestellt werden. Die verwendeten Fasern können nur natürlich vorkommende Fasern, nur synthetische Fasern oder irgend eine kompatible Kombination aus natürlich vorkommenden und synthetischen Fasern umfassen.

Die in der vorliegenden Erfindung verwendeten Fasern können hydrophil oder hydrophob sein, oder sie können aus einer Kombination aus hydrophilen und hydrophoben Fasern bestehen. Der Ausdruck "hydrophil", wie er hier verwendet wird, beschreibt Fasern oder Oberflächen von Fasern, die durch wässrige Flüssigkeiten (beispielsweise wässrige Körperflüssigkeiten), die auf diesen Fasern abgesetzt sind, benetzbar sind. Hydrophilie und Benetzbarkeit werden typischerweise in Ausdrücken des Kontaktwinkels und der Oberflächenspannung der beteiligten Flüssigkeiten und Feststoffe definiert. Dies wird im Detail in einer Veröffentlichung der American Chemical Society mit dem Titel *"Contact Angle, Wettability and Adhesion*", herausgegeben von Robert F. Gould (Copyright 1964) diskutiert. Eine Faser oder die Oberfläche einer Faser wird durch eine Flüssigkeit benetzt (das heißt sie ist hydrophil), wenn entweder der Kontaktwinkel zwischen der Flüssigkeit und der Faser oder dessen Oberfläche weniger als 90° beträgt, oder wenn die Flüssigkeit dazu neigt, sich spontan über der Oberfläche zu verteilen, wobei beide Bedingungen normalerweise gleichzeitig vorliegen. Umgekehrt wird eine Faser oder die Oberfläche einer Faser als hydrophob betrachtet, wenn der Kontaktwinkel größer als 90° ist und die Flüssigkeit sich nicht spontan auf der Oberfläche der Faser ausbreitet.

Erfindungsgemäß bevorzugte Fasern sind hydrophile Fasern. Geeignete hydrophile Fasern umfassen Zellulosefasern, modifizierte Zellulosefasern, Reyon, Polyesterfasern, wie Polyethylenterephthalat (beispielsweise DACRON® ), hydrophiles Nylon (HYDROFIL® ) und dergleichen. Geeignete hydrophile Fasern können auch durch das Hydrophilieren hydrophober Fasern, wie mit einem oberflächenaktiven Stoff behandelten oder mit Silica behandelten thermoplastischen Fasern, die beispielsweise aus Polyolefinen abgeleitet sind, wie Polyethylen oder Polypropylen, Polyacrylen, Polyamiden, Polystyrene, Polyurethane und dergleichen, erhalten werden. Aus Gründen der Verfügbarkeit und der Kosten werden Zellulosefasern, insbesondere Zellstoffasern, für die Verwendung in der vorliegenden Erfindung bevorzugt. Weiterhin bevorzugte hydrophile Fasern zur Verwendung in der vorliegenden Erfindung sind chemisch versteifte Zellulosefasern. Der Ausdruck "chemisch verstreifte Zellulosefasern" bezeichnet dabei Zellulosefasern, die mittels chemischer Mittel versteift werden, um die Steifheit der Fasern sowohl unter trockenen als auch unter wässrigen Bedingungen zu erhöhen. Solche Mittel können das hinzufügen eines chemischen Versteifungsmittels, das beispielsweise die Fasern bedeckt und/oder imprägniert, umfassen. Ein solches Mittel kann auch das Versteifen der Fasern durch das Ändern der chemischen Struktur, beispielsweise durch das Vernetzen von Polymerketten, umfassen. Polymerversteifungsmittel, die die Zellulosefasern bedecken oder imprägnieren können, umfassen: kationische Stärken, die Stickstoff enthaltende Gruppen (beispielsweise Aminogruppen) aufweisen, wie sie von der National Starch and Chemical Corp., Bridgewater, NJ, USA erhältlich sind, Latexe, nassfeste Harze, wie Polyamidepichlorhydrinharz (beispielsweise Kymene® ) 557H, Hercules, Inc., Wilmington, Delaware, USA), Polyacrylamidharze, wie sie beispielsweise in US 3,556,932 beschrieben sind, kommerziell erhältliche Polyacrylamide wie Parez® 631 NZ der American Cyanamid Co., Stanfort, CT, USA, Harnstofformaldehyde sowie Melaminformaldehydharze. Fasern, die durch Vernetzungsbindungen in individuellen Formen versteift wurden (das heißt die einzelnen versteiften Fasern als auch die Verfahren für ihre Herstellung) sind beispielsweise beschrieben in US 3,224,926, US 3,440,135, US 3,932,209 sowie in US 4,035,147. Bevorzugte Vernetzungsmittel sind Glutaraldehyd, Glyoxal, Formaldehyd, Glyoxalsäure, Oxydisuccinicsäure und Zitronensäure. Die durch Vernetzung oder Beschichtung, Imprägnierung oder Vernetzung erhaltenen versteiften Zellulosefasern können verdreht oder gekräuselt sein, vorzugsweise sind die Fasern verdreht und zusätzlich gekräuselt.

Neben den vorstehend genannten Fasermaterialien kann das Core auch thermoplastische Materialien erhalten. Beim Schmelzen wandert zumindest ein Teil dieses thermoplastischen Materials, typischerweise verursacht durch die Kapillargradienten, zwischen den Fasern hindurch zu den Kreuzungen der Fasern. Diese Kreuzungen werden zu Verbindungsstellen für das thermoplastische Material. Wenn das Element abgekühlt wird, so verfestigt sich das thermoplastische Material an diesen Kreuzungen, um Verbindungsstellen zu bilden, die die Matrix oder das Gewebe der Fasern in jeder der jeweiligen Schichten zusammen halten.

Die thermoplastischen Materialien können in verschiedenen Formen, wie etwa Teilchen, Fasern oder Kombinationen aus Teilchen und Fasern, vorliegen. Diese Materialien können aus einer Vielzahl thermoplastischer Polymere ausgewählt aus Polyolefinen, wie Polyethylen (beispielsweise PULPEX® ) und Polypropylen, Polyestern, Copolyestem, Polyvinylacetaten, Polyethylvinylacetaten, Polyvinylchloriden, Polyvinylidenchloriden, Polyacrylaten, Polyamiden, Copolyamiden, Polystyrenen, Polyurethanen und Copolymeren der vorangehenden Stoffe, wie Vinylchlorid/Vinylacetat und dergleichen. Für Cores kommen als Substrat überwiegend aus Cellulose bestehende, vorzugsweise faserförmige Materialien in Betracht.

In einer weiteren Ausführungsform des Cores umfasst dieses neben dem Substrat und dem basischen Polymer bzw. der Zusammensetzung (ZM) weitere, pulverförmige Substanzen, wie zum Beispiel geruchsbindende Substanzen wie Cyclodextrine, Zeolithe, anorganische oder organische Salze und ähnliche Materialien.

In einer Ausführungsform des absorbierenden Cores sind das basische Polymer oder die Zusammensetzung (ZM) in einer Menge im Bereich von 10 bis 90, bevorzugt von 20 bis 80 und besonders bevorzugt von 40 bis 70 Gew.%, bezogen auf das Core, eingearbeitet. In einer Ausführungsform des Cores sind das basische Polymer oder die Zusammensetzung (ZM) als Teilchen in das Core eingearbeitet. Dabei können das basische Polymer oder die Zusammensetzung (ZM) homogen in den Fasermaterialien verteilt sein, sie können lagig zwischen dem Fasermaterial eingebracht sein oder die Konzentration des basischen Polymers oder der Zusammensetzung (ZM) kann innerhalb des Fasermaterials einen Gradienten aufweisen. In einer anderen Ausführungsform des Cores sind das basische Polymer oder die Zusammensetzung (ZM) als Faser in das Core eingearbeitet.

Optional können auch mehrere verschiedene absorbierende Polymere, die sich zum Beispiel in der Sauggeschwindigkeit, der Permeabilität, der Speicherkapazität, der Absorption gegen Druck, der Kornverteilung oder auch der chemischen Zusammensetzung unterscheiden, gleichzeitig eingesetzt werden. Diese verschiedenen absorbierenden Polymere können miteinander vermischt in das Saugkissen eingebracht werden oder aber lokal differenziert im Core plaziert werden. Eine solche differenzierte Plazierung kann in Richtung der Dicke des Cores oder der Länge oder Breite des Cores erfolgen.

Das Core kann durch konventionelle, dem Fachmann bekannte Verfahren, wie sie vom Fachmann allgemein unter Drumforming mit Hilfe von Formrädern,- taschen und Produktfbrmcn und entsprechend angepasste Dosiereinrichtungen für die Rohstoffe zusammengefasst werden. Daneben sind moderne, etablierte Verfahren wie das sogenannte Airlaid-Verfahren (z. B. EP 850 615, US 4,640,810) mit allen Formen der Dosierung, Ablage der Fasern und Verfestigung wie Hydrogenbonding (z. B. DE 197 50 890), Thermobonding, Latexbonding (z. B. EP 850 615) und Hybridbonding, das sogenannte Wetlaid-Verfahren (z. B. WO 99/49905), Carding-, Meltblown-, Spunblown-Prozesse sowie ähnliche Prozesse zur Herstellung von superabsorbierenden Non-Wovens (im Sinne der Definition der EDANA, Brüssel) auch in Kombinationen dieser Verfahren mit- und untereinander übliche Methoden zur Herstellung der Cores. Als weitere Verfahren kommen die Herstellung von Laminaten im weitesten Sinne sowie von extrudierten und coextrudierten, nass- und trocken- sowie nachträglich verfestigten Strukturen in Frage.

In einer weiteren Ausführungsform des absorbierenden Cores umfasst dieses neben dem Substrat und dem in das Substrat eingearbeiteten basischen Polymer bzw. der Zusammensetzung (ZM), die zusammen als Speicherschicht für die Körperflüssigkeiten dienen, eine Aufnahmeschicht, die vorzugsweise zur schnellen Aufnahem und Verteilung der Flüssigkeit im Core dient. Dabei kann die Aufnahmeschicht unmittelbar über der Speicherschicht angeordnet sein, ist es jedoch auch möglich, dass die Aufnahmeschicht durch eine vorzugsweise flüssigkeitsstabile Zwischenschicht von der Speicherschicht getrennt ist. Diese Zwischenschicht dient dann in erster Linie als Stützsubstrat für die Aufnahmeschicht und die Speicherschicht. Bevorzugte Materialien für diese Zwischenschicht sind Polyester-Spinnvliese, oder Vliese aus Polypropylen, Polyethylen oder Nylon.

In einer Ausführungsform des erfindungsgemäßen Cores ist die Aufnahmeschicht frei vom basischen Polymer oder von der Zusammensetzung (ZM). Die Aufnahmeschicht kann jede geeignete Größe aufweisen und muss sich nicht über die gesamte Länge oder Breite der Speicherschicht erstrecken. Die Aufnahmeschicht kann beispielsweise in Form eines Streifens oder Fleckens ausgebildet sein. Die gesamte Aumahmeschicht ist vorzugsweise hydrophil, aber sie kann auch hydrophobe Komponenten aufweisen. Die Aufnahmeschicht kann ein gewobenes Material, ein Vliesmaterial oder einen anderen geeigneten Typ eines Materials umfassen. Vorzugsweise basiert die Aufnahmeschicht auf hydrophoben PolyethylenTerephthalat-Fasern (PET-Fasern), chemisch versteiften Zellulosefasern oder aus Mischungen dieser Fasern. Weiter geeignete Materialien sind Polypropylen, Polyethylen, Nylon oder biologische Fasern. Wenn die Aufnahxneschicht ein Vliesmaterial umfasst, so kann sie durch eine Vielzahl unterschiedlicher Verfahren hergestellt werden. Diese umfassen Nasslegen, Aufbringen im Luftstrom, Aufbringen in der Schmelze, Ausbildung als Spinnvlies, Kardieren (dies umfasst thermisches Verbinden, Verbinden mit Lösungsmitteln oder Verbinden mit dem Schmelzspinnverfahren). Die letztgenannten Prozesse (Ausbildung als Spinnflies und Kardieren) werden bevorzugt, wenn es gewünscht wird, die Fasern in der Aufnahmeschicht auszurichten, da es in solchen Prozessen leichter ist, die Fasern in einer einzigen Richtung auszurichten. Ein besonders bevorzugtes Material für die Aufnahmeschicht ist ein PET-Spinnflies.
In der Ausführungsform, in der der Verbund eine Windel ist, stellen die Bestandteile der Windel, die von der basische Polymer oder die Zusammensetzung verschieden sind, das Substrat des Verbundes dar. In einer bevorzugten Ausiuhrungsform enthält die Windel ein zuvor beschriebenes Core. In diesem Fall stellen die von dem Core unterschiedlichen Bestandteile der Windel das Substrat des Verbundes dar. Im allgemeinen umfasst ein als Windel eingesetzter Verbund eine wasserundurchlässige Unterschicht, eine wasserdurchlässige, vorzugsweise hydrophobe, Oberschicht und eine das absorbierende basische Polymer oder die Zusammensetzung beinhaltende Schicht, die zwischen der Unterschicht und der Oberschicht angeordnet ist. Diese das basische Polymer oder die Zusammensetzung beinhaltende Schicht ist vorzugsweise ein zuvor beschriebenes Core. Die Unterschicht kann alle dem Fachmann bekannten Materialien aufweisen, wobei Polyethylen oder Polypropylen bevorzugt sind. Die Oberschicht kann gleichfalls alle dem Fachmann bekannten und geeigneten Materialien enthalten, wobei Polyester, Polyolefine, Viskose und dergleichen bevorzugt sind, die eine so poröse Schicht ergeben, die einen ausreichenden Flüssigkeitsdurchlass der Oberschicht sicherstellen. In diesem Zusammenhang wird auf die Offenbarung in US 5,061,295, US Re. 26,151, US 3,592,194, US 3,489,148 sowie US 3,860,003 verwiesen.

Weiterhin betrifft die Erfindung ein Verfahren zur Herstellung eines Verbunds, wobei das basische Polymer oder die Zusammensetzung und ein Substrat und ggf. ein geeignetes Hilfsmittel miteinander in Kontakt gebracht werden. Das in Kontakt bringen erfolgt vorzugsweise durch Wetlaid- und Airlaid-Verfahren, Kompaktieren, Extrudieren und Mischen.

Zudem betrifft die Erfindung einen Verbund, der durch das vorstehende Verfahren erhältlich ist.
Zudem betrifft die Erfindung die Verwendung eines der vorstehend beschriebenen basischen Polymere, vorzugsweise wenn diese nicht vernetzt sind, zur Flockung, vorzugsweise bei der Behandlung von Wasser, bei der Retention in der Papierherstellung, zur Störstofffixierung in der Papierherstellung, zur Trockenverfestigung in der Papierherstellung oder zur Nassverfestigung in der Papierherstellung.

Weiterhin betrifft die Erfindung Schäume, Formkörper, Fasern, Folien, Filme, Kabeln, Dichtungsmaterialien, flüssigkeitsaufnehmende Hygieneartikel, Träger für pflanzen- und pilzwachstumsregulierende Mittel, Verpackungsmaterialien und Bodenzusätze, beinhaltend das zuvor beschriebene basische Polymer oder die zuvor beschriebene Zusammensetzung und den zuvor beschriebenen Verbund.

Außerdem betrifft die Erfindung die Verwendung des zuvor beschriebenen basischen Polymers oder der zuvor beschriebenen Zusammensetzung oder des zuvor beschriebenen Verbunds in Schäumen, Formkörpern, Fasern, Folien, Filmen, Kabeln, Dichtungsmaterialien, flüssigkeitsaufnehmenden Hygieneartikeln, Trägern für pflanzen- und pilzwachstumsregulierenden Mitteln, Verpackungsmaterialien und Bodenzusätzen oder zur kontrollierten Freisetzung von Wirkstoffen.

Die Erfindung wird nun anhand nicht limitierender Beispiele näher erläutert.

### TESTMETHODEN

### 1. ERT

ERT steht für EDANA (European Diapers and Nonwoven Association) recommended Test. Diese Methoden sind über die EDANA erhältlich und stellen einen Standard dar, auf den sich die Mitglieder der EDANA geeinigt haben.

### 2. FILTERTEST

In ein 1000 ml Becherglas werden 800 ml Leitungswasser mit einer Temperatur von 20°C vorgelegt. Es werden 5,00 g der zu untersuchenden Polymerprobe unter Rühren mit einen Fingerrührer von 3 cm bei 500 Upm in der sich durch das Rühren ergebenden Trombe gestreut, so dass sich keine Klumpen bilden. Anschließend wird über 60 Minuten weitergerührt und darauf das Erhaltene auf ein Normsieb (125 m gemäß DIN-ISO 3310/1 - 200 x 50 mm) gegeben. Nach vollständigem Durchlauf wird mit 3 x 11 Leitungswasser aus dem Becherglas nachgespült. Nach Durchlauf des Spülwassers wird mit einem Gummiwischer unter dem Sieb befindliches Restwasser abgestreift und anschließend das auf das Sieb befindliche Polymer bis zur Gewichtskonstanz getrocknet. Aus dem Gewicht des Siebes mit und ohne Rückstand wird das Gewicht des Rückstands durch Wiegen ermittelt und auf das Trockengewicht des Polymers bezogen.

### 3. BESTIMMUNG DES SCHMELZPUNKTES

Die Schmelzpunktbestimmung erfolgt im sogenannten. *Schmelzpunktröhrchen:* Die Substanzprobe wird in ein an einer Seite abgeschmolzenes Glasröhrchen, 0 ca. 1 .0 - 1 .5 mm, Länge ca. 7 - 8 cm (Schmelzpunktröhrchen, Schmelzpunktkapillare) etwa 3 - 5 mm hoch eingefüllt nach Thile (Organikum Organisch Chemisches Grundpraktikum, 16. Auflage, 1986, VEB Verlag der Wissenschaften, Seite 73, 74).

Nach dem Einbringen der Substanz am oberen Ende des Röhrchens stößt man die Probe vorsichtig nach unten. Anschließend wird das gefüllte Schmelzpunktröhrchen langsam erhitzt, und die Temperatur bestimmt, bei der die Substanzprobe schmilzt.

### BEISPIELE

### 1. Herstellung von Polymer und Zusammensetzung

### 1.1 Herstellung einer wässrigen Lösung des Amidpolymers

728 g demineralisiertes Wasser und 750 g einer 50 Gew.-%igen wässrigen Acrylamidlösung wurden zusammen unter Rühren vorgelegt und durch 60-minütiges Durchleiten von Stickstoff inertisiert. Dabei wurde der Ansatz auf eine Temperatur von 25°C aufgeheizt. Anschließend wurden 2,68 g 2,2'-Azobisisobuttersäurenitril gelöst in 7 g Wasser, 1,5 g 2-Mercaptoethanol und 0,9 g Ascorbinsäure in 7 g Wasser zugegeben. Danach wurden 4,2 g Wasserstoffperoxid 35 %ig zugegeben. Die adiabatische Polymerisation erreichte nach 17 Minuten eine maximale Temperatur von 85°C. Das erhaltene Polymer hat ein durch Gelpermeationschromatographie bestimmtes Molekulargewicht von Mp von 48.000 g/mol; Mw 56.000 g/mol und enthält 70 ppm nichtumgesetztes Acrylamid. Die wässrige Lösung des Polymers hat bei 20°C eine Viskosität von 1280 mxPas (Brookfield Spindel II, 10 UpM; ASTM-D 1824/90).

### 1.2 Herstellung eines unvernetzten basischen Polymers

20g einer 25 Gew.-%igen wässrigen Polyacrylamidlösung nach Beispiel 1. wurden bei 180°C in Gegenwart von 10 g eines 5 Gew.-%igen Ruthenium/Aktivkohle-Katalysators über einen Zeitraum von sechs Stunden mit 150 bar Wasserstoff beaufschlagt. Der über Titration der entstandenen Amingruppen mit 1 normaler Salzsäure bestimmte Umsatz lag bei 51 % der Theorie.

### 1.3 Herstellung eines vernetzten basischen Polymers

500 g einer 20 Gew.-%igen wässrigen Lösung des unvernetzten basischen Aminpolymers aus Beispiel 1.2 und 20 g Maleinsäuremonomethylester wurden gemischt und anschließend für 16 Stunden auf 60°C erwärmt. Das erhaltene Polymergel wurde mit einem Mixer (Moulinette Typ D56) zerkleinert und in einem Trockenschrank bei 70°C und 50 mbar über 2 Tage getrocknet. Anschließend wurde das getrocknete Polymer auf eine Korngröße nach ERT 420.1-99 von 200 bis 710 µm gemahlen und gesiebt.

### 1.4 Herstellung eines vernetzten sauren Polymers

280 g Acrylsäure, 3,42 g Stratomer® 454 (Ethoxiliertes Trimethylpropantriacrylat) und 700 g Wasser wurden gemischt und mit Stickstoff gespült, bis der Restsauerstoffgehalt kleiner 0,5 ppm betrug. Anschließend wurden nacheinander 0,1 Azobisamidinopropanhydrochlorid (ABAH), 0,4 g Natriumpersulfat, 0,05 g Wasserstorffperoxid 35 %ig und 0,025 Eisensulfat mit 7 H2O, jeweils gelöst in 5 g Wasser, unter Rühren zugegeben. Die Polymerisation wurde so gestartet, dass nach 20 Minuten eine Temperatur von 98°C erreicht wurde. Nach weiteren 60Minuten wurde der erhaltene Gelblock in einem Fleischwolf zerkleinert. Anschließend wurde das Polymer getrocknet und auf eine Korngröße nach ERT 420.1-99 von 200 bis 710 m gemahlen und gesiebt.

### 1.5 Herstellung von Zusammensetzungen aus vernetzem basischen Polymer und vernetztem sauren Polymer nach Trocknung

50 g des vernetzten basischen Polymer aus 1.3 und 50 g des vernetzten sauren Polymers aus 1.4 wurden über 60 Minuten gemischt und die in Tabelle 1 bis 4 aufgeführten Daten bestimmt. Als SFC wurde ein Wert von 255×10-7 ml×s/g gemessen. Die Messungen erfolgten nach den vorstehend angegebenen Methoden.

**Tabelle 1**

| AAP | 0,3 psi/1h | 0,3 psi /4h | 0,7 psi/1h | 0,7 psi /4h | 1,5 psi/4h |
|---|---|---|---|---|---|
| [g/g] | 30 | 36 | 27 | 32 | 26 |

**Tabelle 2**

| PUP 0,7 psi | 1h | 2h | 3h | 4h | |
|---|---|---|---|---|---|
| [g/g] | 31,5 | 46 | 49 | 53 | |

**Tabelle 3**

| PUP 1,5 psi | 1h | 2h | 3h | 4h | |
|---|---|---|---|---|---|
| [g/g] | 19 | 26 | 30 | 34 | |

**Tabelle 4**

| AUL [psi] | 0,01 | 0,30 | 0,60 | 0,90 | 1,50 |
|---|---|---|---|---|---|
| g/g | 40 | 26 | 22 | 21 | 18,5 |

### 1.6 Herstellung von Zusammensetzungen aus vernetzen basischen Polymer und vernetzten saurem Polymer vor Trocknung

500 g des vernetzten basischen Polymers aus 1.3 und 357 g saures vernetztes Polymergel aus 1.4 wurden in einem Fleischwolf vereinigt, zerkleinert und in einem Trockenschrank bei 70°C über 12 Stunden getrocknet. Anschließend wurde das getrocknete Polymer auf eine Korngröße nach ERT 420.1-99 von 200 bis 710 µm gemahlen und gesiebt.

### 2. Herstellung eines Airlaids

Auf einer M&J-Airlaid-Anlage wurden mit einem Faser : Superabsorber(SAP)-Gewichtsverhältnis, wie nachfolgend in Tabelle 5 angegeben, Airlaids hergestellt. Das Basisgewicht des Airlaids betrug ca. 250 g/m² und die Dicke etwa 1,4 mm. Als Faser wurde das Produkt *"Fluff Stora semitreated"* eingesetzt, als Superabsorber das Produkt aus Beispiel 1.5.

Aus dem hergestellten Airlaid wurde ein Prüfkörper mit einem Durchmesser von 9 cm ausgeschnitten und gemäß in EP 339 461 A1 auf einen AUL-Meßtisch gelegt. Bei einer Belastung von 0,7 psi wurde die Flüssigkeitsaufnahme über einen Zeitraum von 13 h aufgezeichnet. Die nach den vorstehend beschriebenen Methoden ermittelten Ergebnisse sind in Tabelle 5 angegeben.

**Tabelle 5**

| | Faser/SAP | Aufnahme [g/g] nach | | | | |
|---|---|---|---|---|---|---|
| | | 0,5 Std. | 1 Std. | 2 Std. | 4 Std. | 1 3 Std. |
| Airlaid mit SAP aus 1.5 | 50:50 | 9,5 | 12,7 | 15,1 | 16,5 | 17,8 |
| | 30:70 | 10,0 | 14,1 | 16,5 | 18,9 | 21,0 |
| Airlaid mit Standart-SAP (Favor SXM 6565) | 50:50 | 7,5 | 10,3 | 11,4 | 11,5 | 11,8 |
| | 30:70 | 6,5 | 8,9 | 9,7 | 10,1 | 10,4 |

Die in dem vorhergehenden Beispiel hergestellten Airlaids wurden auf eine Größe von 30 × 12 cm zugeschnitten und mit einem Tissue bedeckt. Unter einer Belastung von 9 kg wurden im Abstand von 20 Minuten 3-mal 60 ml 0,9 Gew.-%ige NaCl-Lösung zentriert auf das zugeschnittene Airlaid gegeben und das Rewet sowie die Flüssigkeitsverteilung über die Länge des Airlaids gemessen. Die Ergebnisse sind in Tabelle 6 zusammengestellt.

**Tabelle 6**

| | Rewet [g] | Flüssigkeitsverteilung nach Zugabe [cm]* | | |
|---|---|---|---|---|
| Zugabe | | 1. | 2. | 3. |
| Airlaid mit 50:50 5 (Faser/SAP) SAP aus 1.5 | | 23 | 28 | 28 |
| Airlaid mit 50:50 9 (Faser/SAP) Favor SXM 6565 | | 13 | 18 | 26 |

| | | | | |
|---|---|---|---|---|
| * Prüfflüssigkeit wurden mit 0,015 Gew.-% Methylenblau angefärbt | | | | |

## Patentansprüche

1. Verfahren zur Herstellung eines basischen Polymers, wobei ein durch Kettenpolymerisation erhältliches Amidpolymer mit mindestens einer der folgenden Eigenschaften:
(a) eine Glastemperatur im Bereich von 30 bis 250 °C,
(b) eine Molmasse von mindestens 1.000 g/mol,
(c) eine Viskosität als 20 Gew.-%ige wässrige Lösung von mindestens 500 mPa × s,
(d) unvernetzt
hydriert wird.

2. Verfahren nach Anspruch 1, wobei das Hydrieren mittels eines Hydrierkatalysators erfolgt.

3. Verfahren nach Anspruch 2 oder 3, wobei der Hydrierkatalysator ein Element der Gruppen VI B, VII B oder VIII B des Periodensystems der Elemente oder mindestens zwei daraus beinhaltet.

4. Verfahren nach einem der vorhergehenden Ansprüche, wobei der Hydrierkatalysator einen Träger beinhaltet.

5. Verfahren nach einem der vorhergehenden Ansprüche, wobei das Hydrieren nach mindestens einem der nachfolgenden Parameter erfolgt:
(h1) in einer flüssigen oder superkritischen Phase,
(h2) bei einer Temperatur von mindestens 30 °C,
(h3) bei einem Gasdruck von mindestens 1 bar,
(h4) bei einem Hydriergas/Inertgas-Verhältnis im Bereich von 10 : 1 bis 1:10.

6. Verfahren nach einem der vorhergehenden Ansprüche, wobei das basische Polymer mindestens eine der folgenden Eigenschaften zeigt:
(A) eine Glastemperatur im Bereich von -50 bis 250 °C,
(B) eine Schmelztemperatur im Bereich von -30 bis 230°C,
(C) eine Molmasse von mindestens 1.000 g/mol,
(D) eine Viskosität als 20 Gew.-%ige wässrige Lösung von mindestens 30 mPa×s,
(E) einem Neutralisationsgrad im Bereich von 0,1 bis 100 %,
(F) einen pH-Wert im Bereich von 5 bis 14.

7. Verfahren nach einem der Ansprüche 1 bis 6, wobei das basische Polymer mit einem Vernetzer vernetzt wird.

8. Verfahren nach einem der Ansprüche 1 bis 7, wobei das basische Polymer mit einer Brönstedt-Säure neutralisiert wird.

9. Basisches Polymer, erhältlich nach einem Verfahren gemäß eines der vorhergehenden Ansprüche.

10. Verfahren nach einem der Ansprüche 1 bis 8, wobei das basische Polymer in einem weiteren Schritt mit einem im Vergleich zu dem basischen Polymer saurem Polymer in Kontakt gebracht wird, wodurch eine Zusammensetzung (ZM) erhalten wird.

11. Zusammensetzung (ZM), erhältlich nach einem Verfahren gemäß Anspruch 10.

12. Zusammensetzung (ZM), beinhaltend das basische Polymer nach Anspruch 9 und ein im Vergleich zu dem basischen Polymer saures Polymer.

13. Verfahren nach einem der Ansprüche 1 bis 8 oder 10, wobei in einem weiteren Schritt durch in Kontakt bringen der Zusammensetzung oder des basischen Polymers mit einem Substrat ein Verbund entsteht.

14. Verbund, erhältlich durch ein Verfahren nach Anspruch 13.

15. Verbund, beinhaltend das basische Polymer nach Anspruch 9 oder die Zusammensetzung nach Anspruch 11 oder 12 und ein Substrat.

16. Schäume, Formkörper, Fasern, Folien, Filme, Kabel, Dichtungsmaterialien, flüssigkeitsaufnehmende Hygieneartikel, Träger für pflanzen- und pilzwachstumsregulierende Mittel, Zusätze für Baustoffe, Verpackungsmaterialien und Bodenzusätze, beinhaltend das basische Polymer nach Anspruch 9 oder die Zusammensetzung nach Anspruch 11 oder 12 oder den Verbund nach Anspruch 14 oder 15.

17. Verwendung des basischen Polymers nach Anspruch 9 oder der Zusammensetzung nach Anspruch 11 oder 12 oder des Verbunds nach Anspruch 14 oder 15 in Schäumen, Formkörpern, Fasern, Folien, Filmen, Kabeln, Dichtungsmaterialien, flüssigkeitsaufnehmenden Hygieneartikeln, Trägem für pflanzen- und pilzwachstumregulierenden Mitteln, Zusätze für Baustoffe Verpackungsmaterialien und Bodenzusätze oder zur kontrollierten Freisetzung von Wirkstoffen.

18. Verwendung eines basischen Polymers nach Anspruch 9, zur Flockung, bei der Retention in der Papierherstellung, zur Störstofffixierung in der Papierherstellung, zur Trockenverfestigung in der Papierherstellung oder zur Nassverfestigung in der Papierherstellung.

## Claims

1. Process for producing a basic polymer, wherein an amide polymer obtainable by chain polymerisation and with at least one of the following properties:
(a) a glass transition temperature in the range of 30 to 250°C,
(b) a molar mass of at least 1,000 g/mol,
(c) a viscosity as 20 % by weight aqueous solution of at least 500 mPax s,
(d) uncrosslinked
is hydrogenated.

2. Process according to claim 1, wherein hydrogenation is carried out by means of a hydrogenation catalyst.

3. Process according to claim 2 or 3, wherein the hydrogenation catalyst comprises an element of groups VI B, VII B or VIII B of the periodic table of elements or at least two of them.

4. Process according to any of the preceding claims, wherein the hydrogenation catalyst comprises a support.

5. Process according to any of the preceding claims, wherein the hydrogenation is carried out according to at least one of the following parameters:
(h1) in a liquid or supercritical phase,
(h2) at a temperature of at least 30°C,
(h3) at a gas pressure of at least 1 bar,
(h4) at a hydrogenating gas/inert gas ratio in the range of 10:1 to 1:10.

6. Process according to any of the preceding claims, wherein the basic polymer exhibits at least one of the following properties:
(A) a glass transition temperature in the range of -50 to 250°C,
(B) a melting temperature in the range of -30 to 230°C,
(C) a molar mass of at least 1,000 g/mol,
(D) a viscosity as 20 % by weight aqueous solution of at least 30 mPa x s,
(E) a degree of neutralisation in the range of 0.1 to 100%,
(F) a pH in the range of 5 to 14.

7. Process according to any of claims 1 to 6, wherein the basic polymer is crosslinked using a crosslinking agent.

8. Process according to any of claims 1 to 7, wherein the basic polymer is neutralised using a Brønsted acid.

9. Basic polymer obtainable by a process according to any of the preceding claims.

10. Process according to any of claims 1 to 8, wherein in a further step the basic polymer is brought into contact with a polymer which is acidic in comparison to said basic polymer, so a composition (ZM) is obtained.

11. Composition (ZM) obtainable by a process according to claim 10.

12. Composition (ZM) comprising the basic polymer according to claim 9 and a polymer which is acidic in comparison to the basic polymer.

13. Process according to any of claims 1 to 8 or 10, wherein in a further step a composite is produced by bringing the composition or the basic polymer into contact with a substrate.

14. Composite, obtainable by a process according to claim 13.

15. Composite containing the basic polymer according to claim 9 or the composition according to claim 11 or 12 and a substrate.

16. Foams, mouldings, fibres, sheets, films, cables, sealing materials, liquid-absorbing sanitary articles, supports for plant and fungicidal growth-regulating means, additives for building materials, packaging materials and soil additives comprising the basic polymer according to claim 9 or the composition according to claim 11 or 12 or the composite according to claim 14 or 15.

17. Use of the basic polymer according to claim 9 or of the composition according to claim 11 or 12 or of the composite according to claim 14 or 15 in foams, mouldings, fibres, sheets, films, cables, sealing materials, liquid-absorbing sanitary articles, supports for plant and fungicidal growth-regulating means, additives for building materials, packaging materials and soil additives or for controlled release of active ingredients.

18. Use of a basic polymer according to claim 9 for flocculation, in retention in paper production, for impurity fixing in paper production, for dry strength in paper production or for wet strength in paper production.

## Revendications

1. Procédé destiné à la fabrication d'un polymère alcalin, dans quel cas un polymère amidé pouvant être obtenu par polymérisation de chaîne ayant au moins une des caractéristiques suivantes :
(a) une température de transition vitreuse dans la gamme de 30 à 250°C,
(b) une masse molaire d'au moins 1.000 g/mole,
(c) une viscosité comme solution aqueuse de 20 % en poids d'au moins 500 mPa x s,
(d) non réticulé
est hydrogéné.

2. Procédé selon la revendication 1, l'hydrogénation étant effectuée au moyen d'un catalyseur d'hydrogénation.

3. Procédé selon la revendication 2 ou 3, dans quel cas le catalyseur d'hydrogénation comprend un élément des groupes VI B, VII B ou VIII B de la classification périodique des éléments chimiques ou il en comprend au moins deux.

4. Procédé selon l'une des revendications précédentes, dans quel cas le catalyseur d'hydrogénation comprend un porteur.

5. Procédé selon l'une des revendications précédentes, dans quel cas l'hydrogénation est effectuée selon au moins l'un des paramètres suivants :
(h1) dans une phase liquide ou supercritique,
(h2) à une température d'au moins 30°C,
(h3) à une pression de gaz d'au moins 1 bar
(h4) à un rapport gaz d'hydrogénation/gaz inerte dans la marge de 10 : 1 jusqu'à 1 : 10

6. Procédé selon l'une des revendications précédentes, dans quel cas le polymère alcalin montre au moins une des caractéristiques suivantes :
(A) une température de transition vitreuse dans la gamme de -50 à 250°C,
(B) un point de fusion dans la gamme de -30 à 230°C,
(C) une masse molaire d'au moins 1.000 g/mole,
(D) une viscosité comme solution aqueuse de 20 % en poids d'au moins 30 mPa x s,
(E) un degré de neutralisation dans la gamme de 0,1 à 100 %,
(F) une valeur pH dans la gamme de 5 à 14.

7. Procédé selon l'une des revendications 1 à 6, dans quel cas le polymère alcalin est réticulé au moyen d'un agent réticulant.

8. Procédé selon l'une des revendications 1 à 7, dans quel cas le polymère alcalin est neutralisé avec un acide de Brønstedt.

9. Polymère alcalin, pouvant être obtenu par un procédé selon l'une des revendications précédentes.

10. Procédé selon l'une des revendications 1 à 8, dans quel cas dans une étape suivante le polymère alcalin est mis en contact avec un polymère qui en comparaison avec le polymère alcalin est acide, par quel moyen une composition (ZM) est obtenue.

11. Composition (ZM) pouvant être obtenue par un procédé selon la revendication 10.

12. Composition (ZM) comprenant le polymère alcalin selon la revendication 9 et un polymère qui en comparaison avec le polymère alcalin est acide.

13. Procédé selon l'une des revendications 1 à 8 ou 10, dans quel cas dans une étape suivante un composite est généré par la mise en contact de la composition ou du polymère alcalin avec un substrat.

14. Composite pouvant être obtenu par un procédé selon la revendication 13.

15. Composite comprenant le polymère alcalin selon la revendication 9 ou la composition selon la revendication 11 ou 12 et un substrat.

16. Mousses, corps moulés, fibres, feuilles, films, câbles, matériaux d'étanchéité, articles hygiéniques absorbant des liquides, porteurs pour agents de régulation de la croissance de plantes et de champignons, additifs pour matériaux de construction, matériaux d'emballage et additifs pour sols, comprenant le polymère alcalin selon la revendication 9 ou la composition selon la revendication 11 ou 12 ou le composite selon la revendication 14 ou 15.

17. Utilisation du polymère alcalin selon la revendication 9 ou de la composition selon la revendication 11 ou 12 ou du composite selon la revendication 14 ou 15 dans des mousses, des corps moulés, des fibres, des feuilles, des films, des câbles, des matériaux d'étanchéité, des articles hygiéniques absorbant des liquides, des porteurs pour agents de régulation de la croissance de plantes et de champignons, des additifs pour matériaux de construction, matériaux d'emballage et additifs pour sols ou pour la libération contrôlée de matières actives.

18. Utilisation d'un polymère alcalin selon la revendication 9 pour la floculation, durant la rétention dans la production du papier, pour la fixation d'impuretés dans la production du papier, pour le raffermissement au sec dans la production du papier ou pour le raffermissement au mouillé dans la production du papier.
